# EUROPEAN PATENT APPLICATION

(11) **EP 4 480 565 A1**
(43) Date of publication of application: **25.12.2024**
(21) Application number: 24181693.3
(22) Date of filing: 12.06.2024
(51) Int. Cl.: B01D 19/04

(54) **DEFOAMER COMPOSITION**

(30) Priority: 13.06.2023 EP 23178925
(71) Applicant: BASF SE, 67056 Ludwigshafen am Rhein (DE)
(72) Inventor: Peter, Wolfgang, 67056 Ludwigshafen am Rhein (DE); Gernandt, Andreas, 67056 Ludwigshafen am Rhein (DE); Auschra, Clemens, 67056 Ludwigshafen am Rhein (DE)
(74) Representative: Altmann Stößel Dick Patentanwälte PartG mbB

(57) **Abstract**

The invention relates to a defoamer composition. The invention also relates to a method for reducing or preventing foam in an aqueous composition. The defoamer composition of the invention comprises at least one hydrophobic liquid; and at least one modified polyacrylate polymer. The modified polyacrylate polymer is obtainable by a process comprising
1. polymerizing at least one acrylate monomer selected from substituted or unsubstituted C₁-C₂₂ alkyl acrylates, substituted or unsubstituted C₄-C₂₂ cycloalkyl acrylates, substituted or unsubstituted C₁-C₂₂ acrylamides, esters of acrylic acid with polyalkylether alcohol, or combinations of two or more thereof,
to obtain at least one polyacrylate polymer; and
2. modifying the at least one polyacrylate polymer obtained in step (i) by transesterification with at least one alcohol selected from (c1) at least one unsubstituted C₈-C₃₆ alcohol, (c2) at least one polyalkylether alcohol, or combinations of two or more thereof.

## Description

### Field of the invention

The invention relates to a defoamer composition. The invention also relates to a method for reducing or preventing foam in an aqueous composition.

### Background of the invention

Aqueous compositions in the form of dispersion or emulsion are commonly used for a variety of purposes such as coating. These aqueous compositions often contain one or more stabilizing agents such as surface-active agents, emulsifiers, dispersants, etc. The presence of such stabilizing agents leads to a risk of foaming during operations like mixing and applying coats. Foaming may happen due to other reasons. Foaming or entrapment of air bubbles in an aqueous composition leads to a variety of problems. For example, an aqueous coating composition having foam may provide a surface coat having defects such as craters, and fish-eyes.

Defoamers or defoamer compositions are commonly used to abate foaming in aqueous compositions. Defoamer compounds are known in the state of the art and are described, for instance, in the following references.

EP3210663 B1 discloses a silicone defoamer composition comprising a silicone active material, polyether-polydiorganosiloxane, and a polyether polyol.

EP 2947103 A1 discloses a silyl group-containing polyvinyl alcohol-based resin that has defoaming property as well as adhesiveness to inorganic adherend such as glass.

However, the use of defoamers is associated with various problems. Some defoamers exhibit poor defoaming abilities and/or have a short-lived defoamer effect. Defoamers comprising waxes and paraffin oils tend to interfere with the scrub resistance of surface coats. Defoamers may not be compatible with one or more components of an aqueous composition resulting in a change in its rheology or leading to precipitate formation. Certain defoamers such as silicones tend to adversely affect the main use of the aqueous composition. Effective amount of a defoamer composition may modify properties of the aqueous composition to such an extent that its normal function is affected, for e.g., a paint composition may not be able to provide a glossy finish upon addition of a defoamer composition. Thus, there is a continuing demand for defoaming compositions that will effectively defoam aqueous compositions without interfering with their desirable properties. Accordingly, it is an object of the invention to provide a defoamer composition that reduces or prevents foam in an aqueous composition. Further, it is desired that the defoamer composition is compatible with the aqueous composition. It is also an object of the invention to provide a method for reducing or preventing foam in an aqueous composition.

### Summary of the invention

It was surprisingly found that the defoamer composition of the invention displays an effective defoamer activity in an aqueous composition. Further, the defoamer composition has a high compatibility with aqueous compositions. The invention provides a method for reducing or preventing foam in an aqueous composition.

Accordingly, an aspect of the invention is directed to a defoamer composition comprising
a. at least one hydrophobic liquid; and
b. at least one modified polyacrylate polymer obtainable by a process comprising
   i. polymerizing at least one acrylate monomer selected from substituted or unsubstituted C₁-C₂₂ alkyl acrylates, substituted or unsubstituted C₄-C₂₂ cycloalkyl acrylates, substituted or unsubstituted C₁-C₂₂ acrylamides, or esters of acrylic acid with polyalkylether alcohols to obtain at least one polyacrylate polymer; and
   ii. modifying the at least one polyacrylate polymer obtained in step (i) by trans-esterification with at least one polyalkylether alcohol (c2) and optionally at least one unsubstituted C₈-C₃₆ alcohol (c1).

In some embodiments, the invention is directed to a defoamer composition comprising
a. at least one hydrophobic liquid; and
b. at least one modified polyacrylate polymer obtainable by a process comprising
   i. polymerizing at least one acrylate monomer selected from substituted or unsubstituted C₁-C₂₂ alkyl acrylates, substituted or unsubstituted C₄-C₂₂ cycloalkyl acrylates, substituted or unsubstituted C₁-C₂₂ acrylamides, or esters of acrylic acid with polyalkylether alcohols
      to obtain at least one polyacrylate polymer; and
   ii. modifying the at least one polyacrylate polymer obtained in step (i) by trans-esterification with at least one alcohol selected from unsubstituted C₈-C₃₆ alcohols (c1), or polyalkylether alcohols (c2).

Another aspect of the invention is directed to a method for reducing or preventing foam in an aqueous composition comprising adding the defoamer composition to the aqueous composition in an amount in the range of from 0.01 to 5.0 wt.% based on the total weight of the aqueous composition being 100 wt.%.

### Detailed description of the invention

Before the present compositions and formulations of the invention are described, it is to be understood that this invention is not limited to particular compositions and formulations described, since such compositions and formulations may, of course, vary. It is also to be understood that the terminology used herein is not intended to be limiting, since the scope of the invention will be limited only by the appended claims.

If hereinafter a group is defined to comprise at least a certain number of embodiments, this is meant to also encompass a group which preferably consists of these embodiments only. Furthermore, the terms 'first', 'second', 'third' or 'a', 'b', 'c', etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In case the terms 'first', 'second', 'third' or '(A)', '(B)' and '(C)' or '(a)', '(b)', '(c)', '(d)', 'i', 'ii' etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

Furthermore, the ranges defined throughout the specification include the end values as well i.e., a range of 1 to 10 implies that both 1 and 10 are included in the range. For the avoidance of doubt, applicant shall be entitled to any equivalents according to applicable law.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to 'one embodiment' or 'an embodiment' means that a particular feature, structure or characteristic described in connection with the embodiment is included in at least one embodiment of the invention. Thus, appearances of the phrases 'in one embodiment' or 'in an embodiment' in various places throughout this specification are not necessarily all referring to the same embodiment but may refer to so.

Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art. For example, in the appended claims, any of the claimed embodiments can be used in any combination.

The defoamer composition of the invention comprises a modified polyacrylate polymer. The modified polyacrylate polymer is amphiphilic in nature. The properties of the modified polyacrylate polymer depend upon the monomers used for preparing the polyacrylate polymer, and the alcohol used for its transesterification, i.e., polyalkylether alcohol, optionally in combination with a C₈-C₃₆ alcohol. Additionally, the amounts of the monomers and the alcohol used for transesterification play an important role in providing requisite properties to the modified polyacrylate polymer. The modified polyacrylate polymer is compatible with the hydrophobic liquid due to its appropriate amphiphilicity. The defoamer compositions of the invention are also compatible with the aqueous composition. Further, the defoamer compositions of the invention are effective in reducing or preventing foam in an aqueous composition.

Accordingly, an aspect of the invention is directed to a defoamer composition comprising
a. at least one hydrophobic liquid; and
b. at least one modified polyacrylate polymer obtainable by a process comprising
   i. polymerizing at least one acrylate monomer selected from substituted or unsubstituted C₁-C₂₂ alkyl acrylates, substituted or unsubstituted C₄-C₂₂ cycloalkyl acrylates, substituted or unsubstituted C₁-C₂₂ acrylamides, or esters of acrylic acid with polyalkylether alcohol to obtain at least one polyacrylate polymer; and
   ii. modifying the at least one polyacrylate polymer obtained in step (i) by transesterification with at least one polyalkylether alcohol (c2) and optionally at least one unsubstituted C₈-C₃₆ alcohol (c1).

In some embodiments, the invention is directed to a defoamer composition comprising
a. at least one hydrophobic liquid; and
b. at least one modified polyacrylate polymer obtainable by a process comprising
   i. polymerizing at least one acrylate monomer selected from substituted or unsubstituted C₁-C₂₂ alkyl acrylates, substituted or unsubstituted C₄-C₂₂ cycloalkyl acrylates, substituted or unsubstituted C₁-C₂₂ acrylamides, or esters of acrylic acid with polyalkylether alcohol to obtain at least one polyacrylate polymer; and
   ii. modifying the at least one polyacrylate polymer obtained in step (i) by transesterification with at least one alcohol selected from unsubstituted C₈-C₃₆ alcohols (c1), or polyalkylether alcohols (c2).

Within the context of the invention, the term alkyl, as used herein, refers to an acylic saturated aliphatic groups, including linear alkyl saturated hydrocarbon radical denoted by a general formula CₙH₂ₙ₊₁ and wherein n is the number of carbon atoms 1, 2, 3, 4 etc. Preferably, the alkyl refers to linear and branched unsubstituted C₂ to C₂₂ carbon atoms, selected from ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, icosyl, henicosyl, docosyl, 1-ethyl propyl, 1-ethyl butyl, 2-ethyl butyl, 1-ethyl pentyl, 2-ethyl pentyl, 3-ethyl pentyl, 1-ethyl hexyl, 2-ethyl hexyl, 3-ethyl hexyl, 4-ethyl hexyl, 1-ethyl heptyl, 2-ethyl heptyl, 3-ethyl heptyl, 4-ethyl heptyl, 5-ethyl heptyl, 1-ethyl octyl, 2-ethyl octyl, 3-ethyl octyl, 4-ethyl octyl, 5-ethyl octyl, or 6-ethyl octyl.

Within the context of the invention, the term cycloalkyl, as used herein, refers to a monocyclic and a bicyclic saturated cycloaliphatic group, including branched cycloalkyl saturated hydrocarbon. Preferably, the cycloalkyl refers to C₄ to C₂₂ carbon atoms, selected from cyclobutyl, cyclopentyl, cyclohexyl, cycloheptyl, cyclooctyl, cyclononyl, cyclodecyl, cycloundecyl, cycloeodecyl, cyclotridecyl, cyclotetradecyl, cyclopentadecyl, cyclohexadecyl, cycloheptadecyl, cyclooctadecyl, cyclononadecyl, cycloicosyl, cyclohenicosyl, or cyclodocosyl.

Within the context of the invention, the term "alcohol" refers to a compound having one or more hydroxyl groups. Preferably, a C₈-C₃₆ alcohol refers to a linear or branched C₈-C₃₆ alkyl substituted with one hydroxyl group.

Within the context of the invention, the term "mineral oil" refers to an oil selected from various colorless, odorless, and light mixtures of higher alkanes obtained from a mineral source, particularly by various treatments comprising distillation of petroleum. Generally, a mineral oil is a liquid obtained from refining crude oil.

In one embodiment, the composition comprises
a. at least one hydrophobic liquid; and
b. at least one modified polyacrylate polymer obtainable by a process comprising
   i. polymerizing at least one substituted or unsubstituted C₁-C₂₂ alkyl acrylate; and
   ii. modifying the at least one polyacrylate polymer obtained in step (i) by transesterification with at least one polyalkylether alcohol (c2) and optionally with at least one unsubstituted C₈-C₃₆ alcohol (c1).

In one embodiment, the composition comprises
a. at least one hydrophobic liquid; and
b. at least one modified polyacrylate polymer obtainable by a process comprising
   i. polymerizing at least one substituted or unsubstituted C₁-C₂₂ alkyl acrylate; and
   ii. modifying the at least one polyacrylate polymer obtained in step (i) by transesterification with at least one alcohol selected from unsubstituted C₈-C₃₆ alcohols (c1), or polyalkylether alcohols (c2).

In one embodiment, the composition comprises
a. at least one hydrophobic liquid; and
b. at least one modified polyacrylate polymer obtainable by a process comprising
   i. polymerizing at least one substituted or unsubstituted C₁-C₂₂ alkyl acrylate; and
   ii. modifying the at least one polyacrylate polymer obtained in step (i) by transesterification with at least one polyalkylether alcohol (c2).

In one embodiment, the composition comprises
a. at least one hydrophobic liquid; and
b. at least one modified polyacrylate polymer obtainable by a process comprising
   i. polymerizing at least one acrylate monomer selected from substituted or unsubstituted C₁-C₂₂ alkyl acrylates, or esters of acrylic acid with polyalkylether alcohol; and
   ii. modifying the at least one polyacrylate polymer obtained in step (i) by transesterification with at least one polyalkylether alcohol (c2).

In one embodiment, the defoamer composition comprises
a. 0.1 to 25.0 wt.% of the at least one modified polyacrylate polymer; and
b. 75.0 to 99.9 wt.% of the at least one hydrophobic liquid,
based on the total weight of the defoamer composition being 100 wt.%.

### Hydrophobic liquid

In one embodiment, the at least one hydrophobic liquid is selected from mineral oils, organo-modified silicones, vegetable oils, synthetic hydrocarbons, fatty alcohols, alkoxylated fatty alcohols, esters of fatty alcohols, fatty carboxylic acid esters, liquid polypropylene oxides, liquid polypropylene oxide-polyethylene oxide copolymers, esters of polypropylene oxide, or esters of polypropylene oxide-polyethylene oxide copolymers.

In one embodiment, the at least one hydrophobic liquid is selected from mineral oils, organo-modified silicones, vegetable oils, synthetic hydrocarbons, or alkoxylated fatty alcohols.

In one embodiment, the at least one hydrophobic liquid is selected from mineral oils, organo-modified silicones, vegetable oils, or alkoxylated fatty alcohols.

In some preferred embodiments, the composition comprises
a. at least one hydrophobic liquid, which is one or more mineral oil(s) and/or one or more organo-modified silicone(s); and
b. at least one modified polyacrylate polymer obtainable by a process comprising
   i. polymerizing at least one substituted or unsubstituted C₁-C₂₂ alkyl acrylate; and
   ii. modifying the at least one polyacrylate polymer obtained in step (i) by transesterification with at least one polyalkylether alcohol (c2) and optionally with at least one unsubstituted C₈-C₃₆ alcohol (c1).

In one embodiment, the at least one hydrophobic liquid is a mineral oil.

Generally, mineral oils are refined petroleum-based hydrocarbons. A mineral oil is a hydrocarbon mixture comprising paraffinic, naphthenic, or aromatic hydrocarbons.

In one embodiment, the mineral oil has a carbon number in the range of from C₁₅ to C₅₀.

In one embodiment, the mineral oil has a Saybolt Universal Viscosity in the range of from 50 and 300, and preferably in the range of from 100 to 150 in accordance with ASTM D88.

In one embodiment, the mineral oil is selected from mineral oils containing low amounts of aromatic hydrocarbons, white oils, or combinations of two or more thereof. Generally, the white oils are colorless, odorless, and tasteless hydrocarbons without any aromatic or sulfur compounds.

In one embodiment, the mineral oil is a light grade base oil.

In one embodiment, the mineral oil is Base oil N150. Base oil SN 150 is a light grade base oil at the lower end of the specifications for Grade I light base oils.

In one embodiment, the amount of the at least one modified polyacrylate polymer is in the range of from 0.1 to 25.0 wt. %; preferably in the range of from 0.2 to 15.0 wt.%; and more preferably in the range of from 0.4 to 8.0 wt.%, based on the total weight of the defoamer composition being 100 wt.%, when the at least one hydrophobic liquid is mineral oil.

In one embodiment, the at least one hydrophobic liquid is a vegetable oil.

In one embodiment, the vegetable oil is selected from the group consisting of soybean oil, palm oil, pine oil, olive oil, rapeseed oil, sunflower oil, and combinations of two or more thereof.

In one embodiment, the amount of the modified at least one polyacrylate polymer is in the range of from 0.1 to 25.0 wt. %; preferably in the range of from 0.2 to 15.0 wt.%; and more preferably in the range of from 0.4 to 8.0 wt.%, based on total weight of the defoamer composition being 100 wt.%, when the at least one hydrophobic liquid is selected from the group consisting of mineral oil, vegetable oil, and combinations of two or more thereof.

In one embodiment, the defoamer composition comprises
a. 0.1 to 25.0 wt.% of the at least one modified polyacrylate polymer; and
b. 75.0 to 99.9 wt.% of the at least one hydrophobic liquid selected from the group consisting of mineral oil, vegetable oil, and combinations of two or more thereof,
based on the total weight of the defoamer composition being 100 wt.%.

In one embodiment, the defoamer composition comprises
a. 0.1 to 25.0 wt.% of the at least one modified polyacrylate polymer; and
b. 75.0 to 99.9 wt.% of the at least one hydrophobic liquid selected from mineral oils,
based on the total weight of the defoamer composition being 100 wt.%.

In one embodiment, the defoamer composition comprises
a. 0.1 to 25.0 wt.% of the at least one modified polyacrylate polymer; and
b. 75.0 to 99.9 wt.% of the at least one hydrophobic liquid selected from vegetable oils,
based on the total weight of the defoamer composition being 100 wt.%.

In one embodiment, the at least one hydrophobic liquid is a synthetic hydrocarbon.

In one embodiment, the at least one synthetic hydrocarbon is hydrogenated polyisobutene.

In one embodiment, the amount of the at least one modified polyacrylate polymer is in the range of from 0.1 to 25.0 wt. %; preferably in the range of from 0.2 to 15.0 wt.%; and more preferably in the range of from 0.4 to 8.0 wt.%, based on the total weight of the defoamer composition being 100 wt.%, when the at least one hydrophobic liquid is a synthetic hydrocarbon.

In one embodiment, the defoamer composition comprises
a. 0.1 to 25.0 wt.% of the at least one modified polyacrylate polymer; and
b. 75.0 to 99.9 wt.% of the at least one hydrophobic liquid selected from the group consisting of mineral oil, vegetable oil, and synthetic hydrocarbon,
based on the total weight of the defoamer composition being 100 wt.%.

In one embodiment, the at least one hydrophobic liquid is an organo-modified silicone.

In one embodiment, the organo-modified silicone is a polyether modified polysiloxane. The polyether modified polysiloxane is derived from a substituted or unsubstituted polyether polymer. In one embodiment, the unsubstituted polyether polymer is selected from the group consisting of polyethylene glycol, polypropylene glycol, and copolymers thereof. In one embodiment, the substituted polyether polymer has a hydroxy group substituted with a substituent selected from the group consisting of C₁-C₂₂ alkyl, C₆-C₁₂ aryl, and C₁-C₂₂ carboxy.

The organo-modified polysiloxane has a structure selected from comb polymer structure or alpha-omega polymer structure.

In one embodiment, the at least one organo-modified silicone is alpha-omega-polypropylene glycol modified polysiloxane.

In one embodiment, the amount of the at least one modified polyacrylate polymer is in the range of from 1.0 to 80.0 wt. %; preferably 4.0 to 50.0 wt.%; and more preferably 5.0 to 25.0 wt.%, based on the total weight of the defoamer composition being 100 wt.%, when the at least one hydrophobic liquid is an organo-modified silicone.

In one embodiment, the defoamer composition comprises
a. 1.0 to 80.0 wt.% of the at least one modified polyacrylate polymer; and
b. 20.0 to 99.0 wt.% of the at least one hydrophobic liquid selected from organo-modified silicones,
based on the total weight of the defoamer composition being 100 wt.%.

In one embodiment, the at least one hydrophobic liquid is selected from the group consisting of fatty alcohol, alkoxylated fatty alcohol, esters of fatty alcohol, fatty carboxylic acid ester, liquid polypropylene oxide, liquid polypropylene oxide-polyethylene oxide copolymer, ester of polypropylene oxide, and ester of polypropylene oxide-polyethylene oxide copolymer.

In one embodiment, the at least one hydrophobic liquid is a fatty alcohol.

In one embodiment, the at least one hydrophobic liquid is an alkoxylated fatty alcohol.

In one embodiment, the at least one hydrophobic liquid is an ester of a fatty alcohol and a carboxylic acid.

In one embodiment, the at least one hydrophobic liquid is a monoester, diester or a combination thereof of a fatty alcohol and a dicarboxylic acid.

In one embodiment, the at least one hydrophobic liquid is selected from ester of a fatty carboxylic acid and an alcohol.

In one embodiment, the at least one hydrophobic liquid is selected from the group consisting of liquid polypropylene oxide, liquid polypropylene oxide-polyethylene oxide copolymer, and combinations of two or more thereof.

In one embodiment, the at least one hydrophobic liquid is selected from the group consisting of ester of a carboxylic acid with polypropylene oxide, polypropylene oxide-polyethylene oxide copolymer, and combinations of two or more thereof.

In one embodiment, the at least one hydrophobic liquid is selected from the group consisting of monoesters, diesters or both of a dicarboxylic acid with polypropylene oxides, polypropylene oxide-polyethylene oxide copolymers, and combinations of two or more thereof.

In one embodiment, the amount of the at least one modified polyacrylate polymer is in the range of from 1.0 to 80.0 wt. %; preferably 4.0 to 50.0 wt.%; and more preferably 5.0 to 25.0 wt.%, based on total weight of the defoamer composition being 100 wt.%, when the at least one hydrophobic liquid is selected from the group consisting of fatty alcohol, alkoxylated fatty alcohol, esters of fatty alcohol, fatty carboxylic acid ester, liquid polypropylene oxide, liquid polypropylene oxide-polyethylene oxide copolymer, ester of polypropylene oxide, and ester of polypropylene oxide-polyethylene oxide copolymer.

In one embodiment, the defoamer composition comprises
a. 1.0 to 80.0 wt.% of the at least one modified polyacrylate; and
b. 20.0 to 99.0 wt.% of the at least one hydrophobic liquid selected from the group consisting of fatty alcohol, alkoxylated fatty alcohol, ester of fatty alcohol, fatty carboxylic acid ester, liquid polypropylene oxide, liquid polypropylene oxide-polyethylene oxide copolymer, ester of polypropylene oxide, and ester of polypropylene oxide-polyethylene oxide copolymer,
based on the total weight of the defoamer composition being 100 wt.%.

In one embodiment, the at least one hydrophobic liquid is a mixture of two or more hydrophobic liquids.

In one embodiment, the at least one hydrophobic liquid is a mixture of an organo-modified silicone and an alkoxylated fatty alcohol. In some preferred embodiments, the at least one hydrophobic liquid is a mixture of an organo-modified silicone and a mineral oil.

In one embodiment, the defoamer composition comprises
a. 1.0 to 80.0 wt.% of the at least one modified polyacrylate;
b. 5.0 to 50.0 wt.% of the organo-modified silicone; and
c. 15.0 to 94.0 wt.% of the at least one hydrophobic liquid selected from the group consisting of fatty alcohol, alkoxylated fatty alcohol, ester of fatty alcohol, fatty carboxylic acid ester, liquid polypropylene oxide, liquid polypropylene oxide-polyethylene oxide copolymer, ester of polypropylene oxide,and ester of polypropylene oxide-polyethylene oxide copolymer,
based on the total weight of the defoamer composition being 100 wt.%.

In one embodiment, the defoamer composition comprises
a. 1.0 to 80.0 wt.% of the at least one modified polyacrylate;
b. 5.0 to 50.0 wt.% of the organo-modified silicone; and
c. 15.0 to 94.0 wt.% of the alkoxylated fatty alcohol;
based on the total weight of the defoamer composition being 100 wt.%.

In one embodiment, the defoamer composition comprises
a. 1.0 to 40.0 wt.% of the at least one modified polyacrylate;
b. 5.0 to 30.0 wt.% of the organo-modified silicone; and
c. 30.0 to 94.0 wt.% of the alkoxylated fatty alcohol;
based on the total weight of the defoamer composition being 100 wt.%.

### Polyalkyl acrylates

In one embodiment, the at least one polyacrylate polymer is a homopolymer comprising substituted or unsubstituted alkyl acrylates; and step (i) involves polymerizing the acrylate monomer selected from substituted or unsubstituted alkyl acrylates.

In one embodiment, the alkyl acrylate is selected from the group consisting of ethyl acrylate, propyl acrylate, n-butyl acrylate, 2-ethylhexyl acrylate, n-decyl acrylate, isodecyl acrylate, linear or branched C₁₂-C₁₆ alkyl acrylates, n-octadecyl acrylate, and combinations of two or more thereof.

In one embodiment, the alkyl acrylate is n-butyl acrylate.

In one embodiment, the at least one polyacrylate polymer is poly-n-butyl acrylate having a number average molecular weight in the range of from 1000 to 50000 g/mol; preferably in the range of from 1000 to 25000 g/mol; and more preferably in the range of from 1000 to 15000 g/mol determined according to DIN 55672-1.

In one embodiment, the at least one polyacrylate polymer is poly-n-butyl acrylate having a number average molecular weight of 5000 g/mol determined according to DIN 55672-1.

In one embodiment, the at least one polyacrylate polymer is poly-n-butyl acrylate having a number average molecular weight of 9700 g/mol determined according to DIN 55672-1.

In one embodiment, the ester of acrylic acid with polyalkylether alcohol is selected from the group consisting of ethyldiglycol acrylate, polyethyleneglycol acrylate, polyethyleneglycol-polypropylenglycol acrylate, and combinations of two or more thereof.

In one embodiment, the at least one polyacrylate polymer is a copolymer comprising the acrylate monomer and at least one monomer selected from methacrylate monomer, and styrene monomer.

In one embodiment, the at least one polyacrylate polymer is a copolymer selected from random copolymers, or block copolymers, and step (i) involves polymerizing the acrylate monomer and the at least one monomer selected from methacrylate monomers, or styrene monomers to obtain the at least one polyacrylate polymer.

In one embodiment, the at least one polyacrylate polymer is a random copolymer, and step (i) involves polymerizing a monomer mixture comprising the acrylate monomer and the at least one monomer selected from methacrylate monomer, and styrene monomer.

In one embodiment, the at least one polyacrylate polymer is a block copolymer, and step (i) involves two or more sub-steps to prepare the block copolymer and comprises at least the sub-step of polymerizing the acrylate monomer, and at least the sub-step of polymerizing the at least one monomer selected from methacrylate monomer, and styrene monomer.

In one embodiment, the methacrylate monomer is selected from the group consisting of substituted or unsubstituted C₁-C₂₂ alkyl methacryate, substituted or unsubstituted C₁-C₂₂ methacrylamide, and ester of methacrylic acid with polyalkylether alcohol.

In one embodiment, the alkyl methacrylate is selected from the group consisting of ethyl methacrylate, n-butyl methacrylate, stearyl methacrylate, 2-hydroxyethyl methacrylate, and combinations of two or more thereof.

In one embodiment, the ester of methacrylic acid with polyalkylether alcohol is selected from the group consisting of polyethyleneglycol-polypropyleneglycol-methacrylate, polyethyleneglycol-methacrylate, and combinations of two or more thereof.

In one embodiment, the at least one polyacrylate polymer comprises 1.0 to 20.0 wt.% of the methacrylate monomer based on the total weight of the polyacrylate polymer being 100 wt.%.

In one embodiment, the styrene monomer is selected from the group consisting of styrene, C₁-C₄ alkyl substituted styrene, and combinations of two or more thereof.

In one embodiment, the at least one polyacrylate polymer comprises 1.0 to 20.0 wt.% of the styrene monomer based on the total weight of the polyacrylate polymer being 100 wt.%.

### Modification of polyacrylate polymer by transesterification with alcohol

The at least one polyacrylate polymer obtained in step (i) is modified by transesterification with at least one polyalkylether alcohol (c2) and optinally with at least one unsubstituted C₈-C₃₆ alcohol (c1).

In some embodiments, the at least one polyacrylate polymer obtained in step (i) is modified by transesterification with at least one alcohol selected from unsubstituted C₈-C₃₆ alcohol (c1), or polyalkylether alcohol (c2).

In one embodiment, the unsubstituted C₈-C₃₆ alcohol (c1) is selected from the group consisting of 2-ethylhexanol, n-decanol, isodecanol, linear or branched C₁₂-C₁₆ alcohols, n-octadecanol, oleyl alcohol, and combinations of two or more thereof.

In one embodiment, the unsubstituted C₈-C₃₆ alcohol (c1) is selected from the group consisting of linear or branched C₁₂-C₁₆ alcohol, oleyl alcohol, and combinations of two or more thereof.

In one embodiment, the unsubstituted C₈-C₃₆ alcohol (c1) is oleyl alcohol.

In one embodiment, the weight ratio of the at least one polyacrylate polymer to the unsubstituted C₈-C₃₆ alcohol (c1) is in the range of from 25:1 to 5:1; preferably in the range of from 20:1 to 8:1; and more preferably in the range of from 15:1 to 10:1.

In one embodiment, the at least one polyacrylate polymer obtained in step (i) is modified by transesterification with the polyalkylether alcohol (c2).

In one embodiment, the polyalkylether alcohol (c2) is a compound of Formula (A) 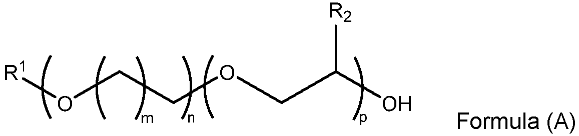 wherein
m is an integer in the range of from ≥1 to ≤ 10;
n and p are independently integers in the range of from ≥0 to ≤ 2000, wherein n+p is an integer in the range of from ≥1 to ≤ 4000;
R¹ is selected from the group consisting of substituted or unsubstituted C₁-C₃₀ alkyl, substituted or unsubstituted C₂-C₃₀ alkenyl, and substituted or unsubstituted phenyl; and
R² is selected from the group consisting of methyl, ethyl, propyl, isopropyl, n-butyl, isobutyl, tert-butyl and substituted or unsubstituted phenyl.

In one embodiment, the polyalkylether alcohol (c2) is compound of Formula (A) 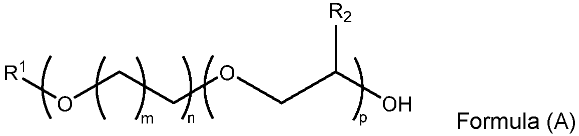 wherein
m is an integer in the range of from ≥1 to ≤ 10;
n and p are independently integers in the range of from ≥0 to ≤ 500, wherein n+p is an integer in the range of from ≥1 to ≤ 1000;
R¹ is selected from the group consisting of substituted or unsubstituted C₁-C₃₀ alkyl, substituted or unsubstituted C₂-C₃₀ alkenyl, and substituted or unsubstituted phenyl; and
R² is selected from the group consisting of methyl, ethyl, propyl, isopropyl, n-butyl, isobutyl, tert-butyl and substituted or unsubstituted phenyl.

In one embodiment, the polyalkylether alcohol (c2) is compound of Formula (A) 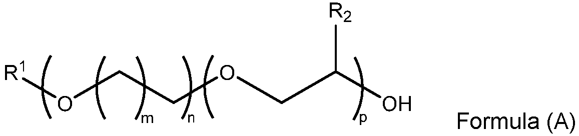 wherein
m is an integer in the range of from ≥1 to ≤ 10;
n and p are independently integers in the range of from ≥0 to ≤ 100, wherein n+p is an integer in the range of from ≥1 to ≤ 200;
R¹ is selected from the group consisting of substituted or unsubstituted C₁-C₃₀ alkyl, substituted or unsubstituted C₂-C₃₀ alkenyl, and substituted or unsubstituted phenyl; and
R² is selected from the group consisting of methyl, ethyl, propyl, isopropyl, n-butyl, isobutyl, tert-butyl and substituted or unsubstituted phenyl.

In one embodiment, the polyalkylether alcohol (c2) is compound of Formula (A) 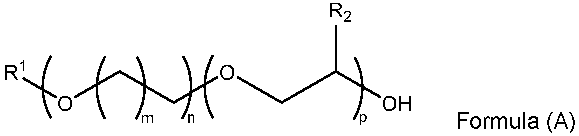 wherein,
m is an integer in the range of from ≥1 to ≤ 10;
n and p are independently integers in the range of from ≥0 to ≤ 100, wherein n+p is an integer in the range of from ≥1 to ≤ 200;
R¹ is selected from the group consisting of substituted or unsubstituted C₁-C₃₀ alkyl, substituted or unsubstituted C₂-C₃₀ alkenyl, and substituted or unsubstituted phenyl; and
R² is methyl.

In one embodiment, the polyalkylether alcohol (c2) is

R¹-(O-CH₂CH₂)ₙ-OH Formula (A1)

Wherein
n is an integer in the range of from ≥1 to ≤ 100;
R¹ is selected from the group consisting of substituted or unsubstituted C₁-C₃₀ alkyl, substituted or unsubstituted C₂-C₃₀ alkenyl, and substituted or unsubstituted phenyl.

In one embodiment, the polyalkylether alcohol (c2) is

R¹-(O-CH₂CH₂)ₙ-OH Formula (A1)

wherein,
n is an integer in the range of from ≥1 to ≤ 100;
R¹ is substituted or unsubstituted C₁-C₃₀ alkyl.

In one embodiment, the polyalkylether alcohol (c2) is an ethoxylate of a mixture of C₁₃-C₁₅ oxo alcohols having 67.0 wt.% C₁₃ oxo alcohol, and 33.0 wt.% C₁₅ oxo alcohol based on the total weight of the polyalkylether alcohol being 100 wt.% .

In one embodiment, the polyalkylether alcohol (c2) is a mixture of C₁₃-C₁₅ oxo alcohol ethoxylates with 3 moles of ethylene oxide.

In one embodiment, the polyalkylether alcohol (c2) is a mixture of C₁₃-C₁₅ oxo alcohol ethoxylates with 5 moles of ethylene oxide.

In one embodiment, the polyalkylether alcohol (c2) is a mixture of C₁₃-C₁₅ oxo alcohol ethoxylates with 7 moles of ethylene oxide.

In one embodiment, the polyalkylether alcohol (c2) is a mixture of C₁₃-C₁₅ oxo alcohol ethoxylates with 8 moles of ethylene oxide.

In one embodiment, the polyalkylether alcohol (c2) is C₁₀-Guerbet alcohol ethoxylate with 7 moles of ethylene oxide.

In one embodiment, the weight ratio of the at least one polyacrylate polymer to the polyalkylether alcohol (c2) is in the range from 1:6 to 6:1; and preferably in the range of from 1:4 to 4:1, more preferably in the range of from 1:3 to 3:1.

In one embodiment, the polyalkylether alcohol (c2) is a mixture of (i) a mixture of C₁₃-C₁₅ oxo alcohol ethoxylates with 7 moles of ethylene oxide, and (ii) a mixture of C₁₃-C₁₅ oxo alcohol ethoxylates with 11 moles of ethylene oxide.

In one embodiment, the polyacrylate polymer obtained in step (i) is modified by transesterification with at least one alcohol comprising a combination of the unsubstituted C₈-C₃₆ alcohol (c1), and the polyalkylether alcohol (c2).

In one embodiment, the weight ratio of the unsubstituted C₈-C₃₆ alcohol (c1), and the polyalkylether alcohol (c2) is in the range from 1:2 to 1:80; and preferably in the range of from 1:5 to 1:50; and more preferably in the range of from 1:5 to 1:25.

In one embodiment, the at least one alcohol is a combination of a mixture of C₁₂-C₁₄ fatty alcohol ethoxylates with 7 moles of ethylene oxide (c1), and oleyl alcohol (c2).

In one embodiment, the at least one alcohol is a combination of branched tridecyl alcohol ethoxylate with 6 moles of ethylene oxide (c1), and oleyl alcohol (c2).

In one embodiment, the at least one alcohol is a combination of iso-C₁₃H₂₇ alcohol ethoxylate with 5 moles of ethylene oxide (c1), and oleyl alcohol (c2).

In one embodiment, the at least one alcohol is a combination of C₁₀-Guerbet alcohol ethoxylate with 7 moles of ethylene oxide (c1), and oleyl alcohol (c2).

In one embodiment, the at least one alcohol is a combination of a mixture of linear C₁₆-C₁₈ alcohol ethoxylates with 11 moles of ethylene oxide (c1), and oleyl alcohol (c2).

In one embodiment, the at least one alcohol is a combination of C₁₀-Oxo alcohol ethoxylate with 7 moles of ethylene oxide (c1), and oleyl alcohol (c2).

In one embodiment, the at least one alcohol is a combination of a mixture of C₁₃-C₁₅ oxo alcohol ethoxylates with 7 moles of ethylene oxide (c1), and oleyl alcohol (c2).

In one embodiment, the weight ratio of the at least one polyacrylate polymer to the at least one alcohol is in the range from 1:6 to 6:1; and preferably in the range of from 1:4 to 4:1, more preferably in the range of from 1:3 to 3:1.

In one embodiment, the peak molecular weight of the modified polyacrylate polymer is in the range from 2000 to 100,000 g/mol; preferably in the range of from 5000 to 60000 g/mol; and more preferably in the range of from 10000 to 40000 g/mol according to DIN 55672-1.

In one embodiment, the modified polyacrylate polymer comprises
1. 20.0 to 70.0 wt.% of at least one polyacrylate polymer; and
2. 30.0 to 80.0 wt.% of at least one polyalkylether alcohol (c2) and optionally at least one unsubstituted C₈-C₃₆ alcohols (c1),
   based on the total weight of the at least one modified polyacrylate polymer being 100 wt.%.

In one embodiment, the modified polyacrylate polymer comprises
1. 20.0 to 70.0 wt.% of at least one polyacrylate polymer; and
2. 30.0 to 80.0 wt.% of at least one alcohol selected from unsubstituted C₈-C₃₆ alcohols (c1), or at least one polyalkylether alcohols (c2),
based on the total weight of the at least one modified polyacrylate polymer being 100 wt.%.

In one embodiment, the modified polyacrylate polymer comprises
1. 20.0 to 70.0 wt.% of at least one polyacrylate polymer; and
2. 30.0 to 80.0 wt.% of at least one alcohol selected from polyalkylether alcohols (c2), based on the total weight of the at least one modified polyacrylate polymer being 100 wt.%.

In one embodiment, the modified polyacrylate polymer comprises
1. 20.0 to 70.0 wt.% of at least one polyacrylate polymer;
2. 29.0 to 79.0 wt.% of at least one alcohol selected from polyalkylether alcohols (c2); and
3. 1.0 to 10.0 wt.% of at least one alcohol selected from unsubstituted C₈-C₃₆ alcohols (c1),
based on the total weight of the at least one modified polyacrylate polymer being 100 wt.%.

### Polymerization of acrylate monomer

Polymerization of monomers is carried out by a free radical polymerization process or by a controlled free radical polymerization process.

In one embodiment, the at least one polyacrylate polymer obtained has a number average molecular weight in the range of from 1000 to 50000 g/mol; preferably in the range of from 1000 to 25000 g/mol; and more preferably in the range of from 1000 to 15000 g/mol determined according to DIN 55672-1.

### A. Free radical polymerization process

In one embodiment, step (i) is carried out by a free radical polymerization process. The free radical polymerization process is carried out using at least one free radical initiator.

In one embodiment, step (i) is carried out in the presence of at least one free radical initiator.

In one embodiment, the at least one free radical initiator is selected from the group consisting of organic peroxides, and azo initiators.

In one embodiment, the at least one free radical initiator is selected from the group consisting of 2,4-dimethyl-2,5-dibenzyl peroxyhexane, tert-butyl peroxybenzoate, di-tert-butyl diperoxyphthalate, methyl ethyl ketone peroxide, dicumyl peroxide, tert-butyl peroxycrotonate, 2,2-bis-tert-butyl(peroxybutane), tert-butylperoxy isopropyl carbonate, 2,5-dimethyl-2,5-bis(benzo-ylperoxy)hexane, tert-butyl peracetate, 2,4-pentadiene peroxide, di-tert butyl peroxide, tert-butyl peroxy-2-ethyl hexanoate, tert-butyl peroxypivalate, tert-amyl peroxy-2-ethylhexanoate, azobisisobutyronitrile, dibenzoyl peroxide, 2,5-dimethyl-2,5-di(tert-butylperoxy)hexyne, 2,5-dimethyl-2,5-di(tertbutylperoxy) hexane and combinations of two or more thereof.

In one embodiment, the at least one free radical initiator is selected from the group consisting of tert-butyl peroxy-2-ethyl hexanoate, tert-butyl peroxypivalate, tert-amyl peroxy-2-ethylhexanoate, azobisisobutyronitrile, dibenzoyl peroxide, and combinations of two or more thereof.

In one embodiment, the at least one free radical initiator is tert-butyl peroxy-2-ethylhexanoate.

In one embodiment, step (i) is carried out at a temperature in the range of from 60 to 160 °C; and preferably in the range of from 80 to 140 °C.

In one embodiment, step (i) is carried out in the presence of a solvent selected from the group consisting of isopropanol, 2-butanol, butyl acetate, methoxypropyl acetate, methoxy propanol, xylene, and combinations of two or more thereof.

In one embodiment, the solvent is 2-butanol.

### B. Controlled free radical polymerization (CFRP) process

In one embodiment, step (i) is carried out by controlled free radical polymerization process. A controlled free radical polymerization is often referred to as living polymerization, where the radicals are not present permanently as free radicals on the chain ends of the growing polymer chain, but instead are present in equilibrium with a non-radical form and are continually being formed anew under polymerization conditions.

The CFRP process allows enhanced control over the polydispersity of the polymer and allows production of polymers within a narrow molecular weight distribution.

The controlled radical polymerization process by the NMP (nitroxide-mediated polymerization) method is preferred. Preferably, the CFRP process is carried out in the presence of at least one nitroxylether of general formula (B).

In one embodiment, step (i) is carried out in the presence of at least one nitroxylether of general formula (B) 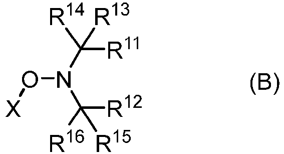 wherein
R¹¹ and R¹² are independently selected from substituted or unsubstituted C₁-C₂₀ alkyl, substituted or unsubstituted phenyl, or substituted or unsubstituted C₇-C₁₈ aralkyl;
   wherein the substituted alkyl bears a substituent selected from C₁-C₄ alkoxy, C₁-C₄ alkoxy-C₁-C₄ alkoxy, or PO₃R^{z}₂, and R^{z} is C₁-C₄ alkyl;
   or
R¹¹ and R¹² together form a ring comprising substituted or unsubstituted C₂-C₁₀ alkylene or substituted or unsubstituted C₂-C₁₀ alkenylene;
   wherein the substituted C₂-C₁₀ alkylene or substituted C₂-C₁₀ alkenylene bear 1, 2, 3, 4 or 5 substituents independently selected from C₁-C₄ alkyl, C₁-C₄ alkoxy, C₁-C₄ alkoxy-C₁-C₄ alkoxy, COOH, or CONH₂; and
   wherein the C₂-C₁₀ alkylene or C₂-C₁₀ alkenylene optionally have one or two CH₂ groups independently of one another replaced by O, C=O, C=NOH, CH-OCOCH₃ or NR^{x}, and R^{x} is C₁-C₄ alkyl or C₁-C₄ alkoxy;
R¹³ is C₁-C₄ alkyl or H;
R¹⁴, R¹⁵, and R¹⁶ independently of one another are C₁-C₄ alkyl;
X is selected from the group consisting of -CH₂-phenyl, -CH(CH₃)-phenyl, -C(CH₃)₂-phenyl, - C(C₅-C₆-cycloalkyl)₂-CN, -C(CH₃)₂CN, -CH₂CH=CH₂, -(CH₃)CH-CH=CH₂, -(C₁-C₄alkyl)CHR¹⁷-C(O)-phenyl, -(C₁-C₄alkyl)-CHR¹⁷-C(O)-(C₁-C₄alkoxy), -(C₁-C₄alkyl)-CHR¹⁷-C(O)-(C₁-C₄alkyl), - (C₁-C₄alkyl)-CHR¹⁷-C(O)-N-di(C₁-C₄alkyl), -(C₁-C₄alkyl)-CHR¹⁷-C(O)-NH(C₁-C₄alkyl), and -(C₁-C₄alkyl)-CHR¹⁷-C(O)-NH₂, wherein
R¹⁷ is hydrogen or C₁-C₄alkyl.

In one embodiment, step (i) is carried out in the presence of at least one nitroxylether of general formula (B) 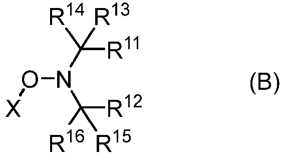 wherein
R¹¹ and R¹² together form a ring comprising substituted or unsubstituted C₂-C₁₀ alkylene;
R¹³ is C₁-C₄ alkyl or H;
R¹⁴, R¹⁵, and R¹⁶ independently of one another are C₁-C₄ alkyl; and
X as defined above.

In one embodiment, step (i) is carried out in the presence of at least one nitroxylether of general formula (B) 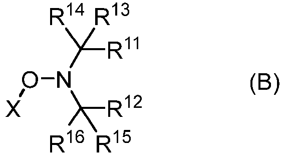 wherein
R¹¹ and R¹² together form a ring comprising substituted or unsubstituted C₂-C₄ alkylene;
R¹⁴, R¹⁵, and R¹⁶ independently of one another are C₁-C₄ alkyl; and
X is selected from the group consisting of the group consisting of -CH₂-phenyl, -CHCH₃-phenyl, -C(CH₃)₂-phenyl, -C(C₅-C₆-cycloalkyl)₂-CN.

In one embodiment, step (i) is carried out in the presence of nitroxylether (B-I)

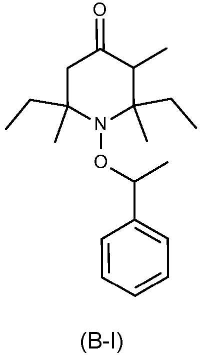

In one embodiment, the amount of compound of the formula B is in the range from 0.01 to 20.0 wt.%; and preferably in the range from 0.1 to 10.0 wt.%, based on the total weight of the at least one alkyl acrylate to be polymerized.

The at least one nitroxylether of general formula (B) decomposes under the action of heat with formation of a stable free nitroxyl radical. Alternatively, a free radical polymerization initiator is added to initiate the conversion of at least one nitroxylether of general formula (B) to corresponding stable free nitroxyl radical.

In one embodiment, the at least one free radical initiator is selected from the group consisting of organic peroxides, and azo initiators.

In one embodiment, the at least one free radical initiator is selected from the group consisting of 2,4-dimethyl-2,5-dibenzyl peroxyhexane, tert-butyl peroxybenzoate, di-tert-butyl diperoxyphthalate, methyl ethyl ketone peroxide, dicumyl peroxide, tert-butyl peroxycrotonate, 2,2-bis-tert-butyl(peroxybutane), tertbutylperoxy isopropyl carbonate, 2,5-dimethyl-2,5-bis(benzo-ylperoxy)hexane, tert-butyl peracetate, 2,4-pentadiene peroxide, di-tert butyl peroxide, tert-butyl peroxy-2-ethyl hexanoate, tert-butyl peroxypivalate, tert-amyl peroxy-2-ethylhexanoate, azobisisobutyronitrile, dibenzoyl peroxide, 2,5-dimethyl-2,5-di(tert-butylperoxy)hexyne, 2,5-dimethyl-2,5-di(tertbutylperoxy) hexane and combinations of two or more thereof.

In one embodiment, the at least one free radical initiator is selected from the group consisting of tert-butyl peroxy-2-ethyl hexanoate, tert-butyl peroxypivalate, tert-amyl peroxy-2-ethylhexanoate, azobisisobutyronitrile, dibenzoyl peroxide, and combinations of two or more thereof.

In one embodiment, the at least one free radical initiator is tert-butyl peroxy-2-ethylhexanoate.

In one embodiment, the total amount of the at least one free radical initiator is in the range from 1.5 to 7.0 wt.% based on the total weight of the monomer.

In one embodiment, step (i) is carried out in the presence of at least one stable free nitroxyl radical.

In one embodiment, step (i) is carried out in the presence of at least one stable free nitroxyl radical selected from the group consisting of radicals of formulae Za, Zb, Zc, Zd, Ze, Zf, Zg Zh, and combinations of two or more thereof

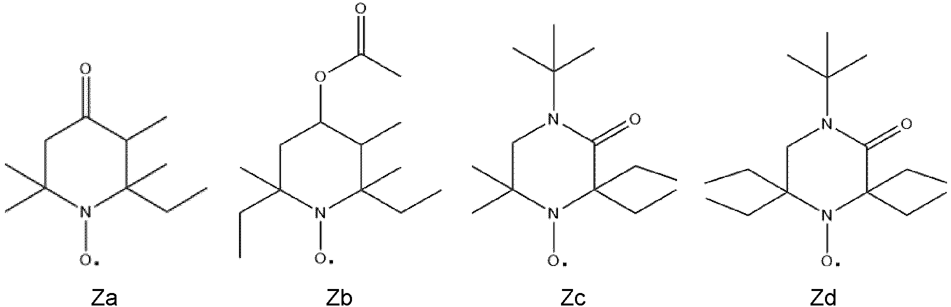

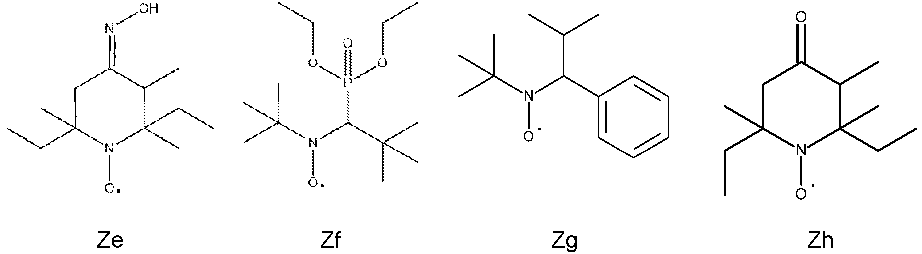

In one embodiment, step (i) is carried out at a temperature in the range of from 80 to 180 °C; preferably in the range of from 100 to 175 °C; more preferably in the range of from 100 to 150°C; and even more preferably in the range of from 110 to 130 °C.

In one embodiment, the polydispersity of the at least one polyalkyl acrylate obtained by the controlled free radical polymerization process is in the range of from 1.2 to 2.0; and preferably in the range of from 1.2 to 1.8.

In one embodiment, the peak average molecular weight of the at least one modified polyacrylate polymer is in the range of from 2000 to 100,000 g/mol.

The polydispersity of the at least one modified polyalkyl acrylate is in the range of from 1.2 to 2.0.

### Defoamer composition

In one embodiment, the defoamer composition further comprises at least one additive selected from the group consisting of water, non-ionic surfactants, anionic surfactants, liquid alkoxylates selected from liquid polypropyleneoxide or liquid polypropyleneoxide copolymers, liquid polyethers, liquid polyesters, solid particles based on silica or based on synthetic or natural waxes, and combinations of two or more thereof.

In one embodiment, the at least one additive is water.

In some preferred embodiments, the composition comprises
a. at least one hydrophobic liquid, which is one or more mineral oil(s) and/or one or more organo-modified silicone(s);
b. at least one modified polyacrylate polymer obtainable by a process comprising
   i. polymerizing at least one substituted or unsubstituted C₁-C₂₂ alkyl acrylate; and
   ii. modifying the at least one polyacrylate polymer obtained in step (i) by transesterification with at least one polyalkylether alcohol (c2) and optionally with at least one unsubstituted C₈-C₃₆ alcohol (c1);
   and water.

In one embodiment, the at least one additive is a wax.

In one embodiment, the at least one additive is a polyethylene wax.

In one embodiment, amount of the wax is in the range from 1.0 wt.% to 25 wt.% based on the total weight of the defoamer composition being 100 wt.%.

Another aspect of the invention is directed to a method for reducing or preventing foam in an aqueous composition comprising adding to the aqueous composition the defoamer composition in an amount in the range of from 0.01 to 5.0 wt.% based on the weight of the aqueous composition being 100 wt.%.

In one embodiment, the method involves adding to the aqueous composition the defoamer composition in an amount in the range of from 0.1 to 1.0 wt.% based on the total weight of the aqueous composition being 100 wt.%.

In one embodiment, the method involves adding to the aqueous composition 0.5 wt.% of the defoamer composition, based on the total weight of the aqueous composition being 100 wt.%.

In one embodiment, the aqueous composition is selected from the group consisting of water-based paint, coating composition, ink, and adhesive composition.

In one embodiment, the aqueous composition is a coating composition.

Generally, the aqueous compositions are water-borne sub-micrometer dispersions of polymer particles based on acrylic polymer, styrene acrylic copolymer, or vinyl acrylic copolymer.

The aqueous compositions are designed for use on different substrates like mineral substrates, wood, metal, paper, or plastic.

Another aspect of the invention is directed to the use of the defoamer composition for reducing or preventing foam in an aqueous composition; wherein the amount of the defoamer composition is in the range of from 0.01 to 5.0 wt.% based on the total weight of the aqueous composition being 100 wt.%.

In one embodiment, the use involves adding to the aqueous composition the defoamer composition in an amount in the range of from 0.1 to 1.0 wt.% based on the total weight of the aqueous composition being 100 wt.%.

In one embodiment, the use involves adding to the aqueous composition 0.5 wt.% of the defoamer composition, based on the total weight of the aqueous composition being 100 wt.%.

In one embodiment, the aqueous composition is selected from is selected from the group consisting of water-based paint, coating composition, ink, and adhesive composition.

In one embodiment, the aqueous composition is a coating composition.

The invention offers one or more of the following advantages:
1. The defoamer compositions of the invention are compatible with aqueous compositions.
2. The defoamer compositions of the invention display a high defoaming activity in aqueous compositions.
3. A low amount of the defoamer compositions of the invention provides a high defoaming activity.

In the following, there are provided a list of embodiments to further illustrate the present disclosure without intending to limit the disclosure to specific embodiments listed below.
1. A defoamer composition comprising
   a. at least one hydrophobic liquid; and
   b. at least one modified polyacrylate polymer obtainable by a process comprising
      i. polymerizing at least one acrylate monomer selected from substituted or unsubstituted C₁-C₂₂ alkyl acrylates, substituted or unsubstituted C₄-C₂₂ cycloalkyl acrylates, substituted or unsubstituted C₁-C₂₂ acrylamides, or esters of acrylic acid with polyalkylether alcohol
         to obtain at least one polyacrylate polymer; and
      ii. modifying the at least one polyacrylate polymer obtained in step (i) by transesterification with at least one polyalkylether alcohol (c2) and optionally at least one unsubstituted C₈-C₃₆ alcohol (c1).
2. A defoamer composition comprising
   a. at least one hydrophobic liquid; and
   b. at least one modified polyacrylate polymer obtainable by a process comprising
      i. polymerizing at least one acrylate monomer selected from substituted or unsubstituted C₁-C₂₂ alkyl acrylates, substituted or unsubstituted C₄-C₂₂ cycloalkyl acrylates, substituted or unsubstituted C₁-C₂₂ acrylamides, or esters of acrylic acid with polyalkylether alcohol
         to obtain at least one polyacrylate polymer; and
      ii. modifying the at least one polyacrylate polymer obtained in step (i) by transesterification with at least one alcohol selected from unsubstituted C₈-C₃₆ alcohols (c1), or polyalkylether alcohols (c2).
3. The composition according to embodiment 1 or 2 comprising
   a. at least one hydrophobic liquid; and
   b. at least one modified polyacrylate polymer obtainable by a process comprising
      i. polymerizing at least one acrylate monomer selected from substituted or unsubstituted C₁-C₂₂ alkyl acrylates, or esters of acrylic acid, preferably at least one substituted or unsubstituted C₁-C₂₂ alkyl acrylate, with polyalkylether alcohol; and
      ii. modifying the at least one polyacrylate polymer obtained in step (i) by transesterification with at least one polyalkylether alcohol (c2) and optionally at least one unsubstituted C₈-C₃₆ alcohol (c1);
         or
         modifying the at least one polyacrylate polymer obtained in step (i) by transesterification with at least one alcohol selected from unsubstituted C₈-C₃₆ alcohols (c1), or polyalkylether alcohols (c2).
4. The composition according to any of the embodiments 1 to 3, wherein the at least one hydrophobic liquid is selected from the group consisting of mineral oil, organo-modified silicone, vegetable oil, synthetic hydrocarbon, fatty alcohol, alkoxylated fatty alcohol, esters of fatty alcohol, fatty carboxylic acid ester, liquid polypropylene oxide, liquid polypropylene oxide-polyethylene oxide copolymer, ester of polypropylene oxide, ester of polypropylene oxide-polyethylene oxide copolymer, and combinations of two or more thereof.
5. The composition according to any of the embodiments 1 to 4, wherein the at least one hydrophobic liquid is a mineral oil.
6. The composition according to any of the embodiments 1 to 4, wherein the at least one hydrophobic liquid is a vegetable oil.
7. The composition according to embodiment 5 or 6, wherein the amount of the at least one modified polyacrylate polymer is in the range of from 0.1 to 25.0 wt.% based on the total weight of the defoamer composition being 100 wt.%.
8. The composition according to claim any of the embodiments 1 to 4, wherein the at least one hydrophobic liquid is an organo-modified silicone.
9. The composition according to embodiment 8, wherein the organo-modified polysiloxane is a polyether modified polysiloxane.
10. The composition according to embodiment 8 or 9, wherein the amount of the at least one modified polyacrylate polymer is in the range of from 1.0 to 80.0 wt.% based on the total weight of the defoamer composition being 100 wt.%.
11. The composition according to any of the embodiments 1 to 10, wherein the alkyl acrylate is selected from the group consisting of ethyl acrylate, propyl acrylate, n-butyl acrylate, 2-ethylhexyl acrylate, n-decyl acrylate, isodecyl acrylate, linear or branched C₁₂-C₁₆ alkyl acrylates, n-octadecyl acrylate, or combinations of two or more thereof.
12. The composition according to any of the embodiments 1 to 11, wherein the ester of acrylic acid with polyalkylether alcohol is selected from the group consisting of ethyldiglycol acrylate, polyethyleneglycol acrylate, polyethyleneglycol-polypropylenglycol acrylate, or combinations of two or more thereof.
13. The composition according to any of the embodiments 1 to 12, wherein the at least one polyacrylate polymer is a copolymer selected from the group consisting of random copolymers, and block copolymers, and wherein step (i) involves polymerizing the acrylate monomer and at least one monomer selected from methacrylate monomer, and styrene monomer to obtain the at least one polyacrylate polymer.
14. The composition according to embodiment 13, wherein the at least one polyacrylate polymer is a random copolymer, and wherein step (i) involves polymerizing a monomer mixture comprising the acrylate monomer and at least one monomer selected from methacrylate monomer, and styrene monomer.
15. The composition according to embodiment 13, wherein the at least one polyacrylate polymer is a block copolymer, and wherein step (i) involves two or more sub-steps to prepare the block copolymer and comprises at least the sub-step of polymerizing at least one acrylate monomer, and at least the sub-step of polymerizing at least one monomer selected from methacrylate monomer, and styrene monomer.
16. The composition according to any of the embodiments 13 to 15, wherein the methacrylate monomer is selected from the group consisting of substituted or unsubstituted C₁-C₂₂ alkyl methacryate, substituted or unsubstituted C₁-C₂₂ methacrylamide, ester of methacrylic acid with polyalkylether alcohol, and combinations of two or more thereof.
17. The composition according to embodiment 16, wherein the alkyl methacrylate s selected from the group consisting of ethyl methacrylate, n-butyl methacrylate, stearyl methacrylate, 2-hydroxyethyl methacrylate, and combinations of two or more thereof.
18. The composition according to embodiment 16, wherein the ester of methacrylic acid with polyalkylether alcohol is selected from the group consisting of polyethyleneglycol-polypropyleneglycol-methacrylate, polyethyleneglycol-methacrylate, and combinations thereof.
19. The composition according to any of the embodiments 13 to 18, wherein the at least one polyacrylate polymer comprises 1.0 to 20.0 wt.% of the methacrylate monomer based on the total weight of the polyacrylate polymer being 100 wt.%.
20. The composition according to any of the embodiments 13 to 15, wherein the styrene monomer is selected from the group consisting of styrene, C₁-C₄ alkyl substituted styrene, and combinations of two or more thereof; and wherein the at least one polyacrylate polymer comprises 1.0 to 20.0 wt.% of the styrene monomer based on the total weight of the polyacrylate polymer being 100 wt.%.
21. The composition according to any of the embodiments 1 to 20, wherein the unsubstituted C₈-C₃₆ alcohol (C1) is selected from the group consisting of 2-ethylhexanol, n-decanol, isodecanol, linear or branched C₁₂-C₁₆ alcohols, n-octadecanol, oleyl alcohol, and combinations of two or more thereof.
22. The composition according to any of the embodiments 1 to 21, wherein the unsubstituted C₈-C₃₆ alcohol is selected from the group consisting of linear or branched C₁₂-C₁₆ alcohol, oleyl alcohol, and combinations of two or more thereof.
23. The composition according to any of the embodiments 1 to 22, wherein the weight ratio of the polyacrylate polymer to the unsubstituted C₈-C₃₆ alcohol (C1) is in the range of from 25:1 to 5:1.
24. The composition according to any of the embodiments 1 to 23, wherein the polyether alcohol (C2) is 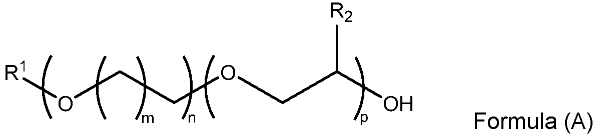 wherein,
   m is an integer in the range of from ≥1 to ≤ 10;
   n and p are independently integers in the range of from ≥0 to ≤ 2000, wherein n+p is an integer in the range of from ≥1 to ≤ 4000;
   R¹ is selected from the group consisting of substituted or unsubstituted C₁-C₃₀ alkyl, substituted or unsubstituted C₂-C₃₀ alkenyl, and substituted or unsubstituted phenyl; and
   R² is selected from the group consisting of methyl, ethyl, propyl, isopropyl, n-butyl, isobutyl, tert-butyl or substituted and unsubstituted phenyl.
25. The composition according to any of the embodiments 1 to 24, wherein the polyether alcohol (c2) is

   R¹-(O-CH₂CH₂)ₙ-OH Formula (A)

   wherein,
   n is an integer in the range of from ≥1 to ≤ 100; and
   R¹ is selected from the group consisting of substituted or unsubstituted C₁-C₃₀ alkyl, substituted or unsubstituted C₂-C₃₀ alkenyl, or substituted or unsubstituted phenyl.
26. The composition according to any of the embodiments 1 to 25, wherein the weight ratio of the polyacrylate polymer to the polyether alcohol (C2) is in the range from 1:4 to 4:1, preferably in the range of from 1:3 to 3:1.
27. The composition according to any of the embodiments 1 to 26, wherein the peak molecular weight of the at least one modified polyacrylate polymer is in the range from 2000 to 100,000 g/mol according to to DIN 55672-1.
28. The composition according to any of the embodiments 1 to 27, wherein the modified polyacrylate polymer comprises
   a. 20.0 to 70.0 wt.% of the at least one polyacrylate polymer; and
   b. 30.0 to 80.0 wt.% of at least one polyalkylether alcohol (c2) and optionally at least one unsubstituted C₈-C₃₆ alcohol (c1);
      or,
   a. 20.0 to 70.0 wt.% of the at least one polyacrylate polymer; and
   b. 30.0 to 80.0 wt.% of the at least one alcohol selected from unsubstituted C₈-C₃₆ alcohols (c1), or polyalkylether alcohols (c2),
   based on the total weight of the at least one modified polyacrylate polymer being 100 wt.%.
29. The composition according to any of the embodiments 1 to 28, wherein step (i) is carried out in the presence of at least one free radical initiator.
30. The composition according to embodiment 29, wherein the at least one free radical initiator is selected from the group consisting of organic peroxide, azo initiator, and combinations thereof.
31. The composition according to embodiment 29 or 30, wherein the at least one free radical initiator is selected from the group consisting of 2,4-dimethyl-2,5-dibenzyl peroxyhexane, tert-butyl peroxybenzoate, di-tert-butyl diperoxyphthalate, methyl ethyl ketone peroxide, dicumyl peroxide, tert-butyl peroxycrotonate, 2,2-bis-tert-butyl(peroxybutane), tert-butylperoxy isopropyl carbonate, 2,5-dimethyl-2,5-bis(benzoylperoxy)hexane, tert-butyl peracetate, 2,4-pentadiene peroxide, di-tert butyl peroxide, tert-butyl peroxy-2-ethyl hexanoate, tert-butyl peroxypivalate, tert-amyl peroxy-2-ethylhexanoate, azobisisobutyronitrile, dibenzoyl peroxide, 2,5-dimethyl-2,5-di(tert-butylperoxy)hexyne, 2,5-dimethyl-2,5-di(tertbutylperoxy) hexane, and combinations of two or more thereof.
32. The composition according to any of the embodiments 29 to 31, wherein the at least one free radical initiator is selected from the group consisting of tert-butyl peroxy-2-ethyl hexanoate, tert-butyl peroxypivalate, tert-amyl peroxy-2-ethylhexanoate, azobisisobutyronitrile, dibenzoyl peroxide, and combinations of two or more thereof.
33. The composition according to any of the embodiments 29 to 32, wherein the at least one free radical initiator is tert-butyl peroxy-2-ethylhexanoate.
34. The composition according to any of the embodiments 29 to 33, wherein step (i) is carried out in the presence of a solvent selected from the group consisting of isopropanol, 2-butanol, butyl acetate, methoxypropyl acetate, methoxy propanol, xylene, and combinations of two or more thereof.
35. The composition according to embodiment 34, wherein the solvent is 2-butanol.
36. The composition according to any of the embodiments 1 to 35, wherein the step (i) is carried out in the presence of at least one nitroxylether of general formula (B) 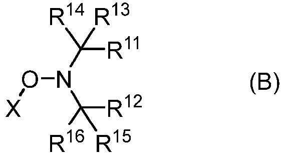 wherein
   R¹¹ and R¹² are independently selected from the group consisting of substituted or unsubstituted C₁-C₂₀ alkyl, substituted or unsubstituted phenyl, and substituted or unsubstituted C₇-C₁₈ aralkyl;
   wherein the substituted alkyl bears a substituent selected from C₁-C₄ alkoxy, C₁-C₄ alkoxy-C₁-C₄ alkoxy, or PO₃R^{z}₂, and R^{z} is C₁-C₄ alkyl; or
   R¹¹ and R¹² together form a ring comprising substituted or unsubstituted C₂-C₁₀ alkylene or substituted or unsubstituted C₂-C₁₀ alkenylene;
   wherein the substituted C₂-C₁₀ alkylene or substituted C₂-C₁₀ alkenylene bear 1, 2, 3, 4 or 5 substituents independently selected from C₁-C₄ alkyl, C₁-C₄ alkoxy, C₁-C₄ alkoxy-C₁-C₄ alkoxy, COOH, or CONH₂; and
   wherein the C₂-C₁₀ alkylene or C₂-C₁₀ alkenylene optionally have one or two CH₂ groups independently of another replaced by O, C=O, C=NOH, CH-OCOCH₃ or NR^{x}, and R^{x} is C₁-C₄ alkyl or C₁-C₄ alkoxy;
   R¹³ is C₁-C₄ alkyl or H;
   R¹⁴, R¹⁵, and R¹⁶ independently of one another are C₁-C₄ alkyl;
   X is selected from the group consisting of -CH₂-phenyl, -CHCH₃-phenyl, -C(CH₃)₂-phenyl, -C(C₅-C₆₋cycloalkyl)₂-CN, -C(CH₃)₂CN, -CH₂CH=CH₂, -(CH₃)CH-CH=CH₂, -(C₁-C₄alkyl)CHR¹⁷-C(O)-phenyl, -(C₁-C₄alkyl)-CHR¹⁷-C(O)-(C₁-C₄alkoxy), -(C₁-C₄alkyl)-CHR¹⁷-C(O)-(C₁-C₄)alkyl, -(C₁-C₄alkyl)-CHR¹⁷-C(O)-N-di(C₁-C₄alkyl), -(C₁-C₄alkyl)-CHR¹⁷-C(O)-NH(C₁-C₄alkyl), and -(C₁-C₄alkyl)-CHR¹⁷-C(O)-NH₂, wherein
   R¹⁷ is hydrogen or C₁-C₄alkyl.
37. The composition according to embodiment 36, wherein the step (i) is carried out in the presence of nitroxylether (B-I) 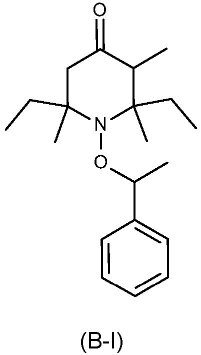
38. The composition according to embodiment 36 or 37, wherein step (i) is carried out in the presence of at least one free radical initiator is selected from the group consisting of the group consisting of organic peroxide,azo initiator, and combinations thereof.
39. The composition according to any of the embodiments 36 to 38, wherein the at least one free radical initiator is selected from the group consisting of 2,4-dimethyl-2,5-dibenzyl peroxyhexane, tert-butyl peroxybenzoate, di-tert-butyl diperoxyphthalate, methyl ethyl ketone peroxide, dicumyl peroxide, tert-butyl peroxycrotonate, 2,2-bis-tert-butyl(peroxybutane), tertbutylperoxy isopropyl carbonate, 2,5-dimethyl-2,5-bis(benzoylperoxy)hexane, tert-butyl peracetate, 2,4-pentadiene peroxide, di-tert butyl peroxide, tert-butyl peroxy-2-ethyl hexanoate, tert-butyl peroxypivalate, tert-amyl peroxy-2-ethylhexanoate, azobisisobutyronitrile, dibenzoyl peroxide, 2,5-dimethyl-2,5-di(tert-butylperoxy)hexyne, 2,5-dimethyl-2,5-di(tertbutylperoxy) hexane, and combinations of two or more thereof.
40. The composition according to any of the embodiments 36 to 39, wherein the at least one free radical initiator is selected from the group consisting of tert-butyl peroxy-2-ethyl hexanoate, tert-butyl peroxypivalate, tert-amyl peroxy-2-ethylhexanoate, azobisisobutyronitrile, dibenzoyl peroxide and combinations of two or more thereof.
41. The composition according to any of the embodiments 36 to 40, wherein the at least one free radical initiator is tert-butyl peroxy-2-ethylhexanoate.
42. The composition according to any of the embodiments 36 to 41, wherein the total amount of the free radical initiator is in the range from 1.5 to 7.0 wt.% based on the total weight of monomers being 100 wt.%.
43. The composition according to any of the embodiments 36 to 42, wherein the polydispersity of the at least one polyalkyl acrylate is in the range from 1.2 to 2.0.
44. The composition according to any of the embodiments 36 to 43, wherein the peak molecular weight of the at least one modified polyacrylate polymer is in the range from 2000 to 100,000 g/mol.
45. The defoamer composition according to any of the embodiments 1 to 44 further comprising at least one additive selected from the group consisting of water, non-ionic surfactants, anionic surfactants, liquid alkoxylates selected from liquid polypropyleneoxide or liquid polypropyleneoxide copolymers, liquid polyethers, liquid polyesters, solid particles based on silica or based on synthetic or natural waxes, and combinations of two or more thereof.
46. The defoamer composition according to any of the embodiments 1 to 45, which comprises
   a. at least one hydrophobic liquid, which is one or more mineral oil(s) and/or one or more organo-modified silicone(s);
   b. at least one modified polyacrylate polymer obtainable by a process comprising
      i. polymerizing at least one substituted or unsubstituted C₁-C₂₂ alkyl acrylate; and
      ii. modifying the at least one polyacrylate polymer obtained in step (i) by transesterification with at least one polyalkylether alcohol (c2) and optionally with at least one unsubstituted C₈-C₃₆ alcohol (c1);
      and water.
47. A method for reducing or preventing foam in an aqueous composition comprising adding the defoamer composition according to any of the embodiments 1 to 46 to the aqueous composition in an amount in the range of from 0.01 to 5.0 wt.% based on the total weight of the aqueous composition being 100 wt.%.
48. The method according to embodiment 47, wherein the aqueous composition is selected from the group consisting of water-based paint, coating composition, ink, and adhesive composition.
49. Use of the defoamer composition according to any of the embodiments 1 to 46 for reducing or preventing foam in an aqueous composition; wherein the amount of the defoamer composition is in the range of from 0.01 to 5.0 wt.% based on the total weight of the aqueous composition being 100 wt.%.
50. The use according to embodiment 49, wherein the aqueous composition is selected from the group consisting of water-based paint, coating composition, ink, and adhesive composition.

While the invention has been described in terms of its specific embodiments, certain modifications and equivalents will be apparent to those skilled in the art and are intended to be included within the scope of the invention.

### Examples

The invention is illustrated in detail by non-restrictive working examples which follow. More particularly, the test methods specified hereinafter are part of the general disclosure of the application and are not restricted to the specific working examples.

### Materials

The following materials are used in the Examples:

| | |
|---|---|
| Lutensol^{®}AO 3 | is an ether based on C₁₃-C₁₅ oxo alcohol and 3 moles of ethylene oxide, and the oxo alcohol ethoxylate consists of ca. 67% C₁₃ product and ca. 33% C₁₅ product; |
| Lutensol^{®}AO 5 | is an ether based on C₁₃-C₁₅ oxo alcohol and 5 moles of ethylene oxide, and the oxo alcohol ethoxylate consists of ca. 67% C₁₃ product and ca. 33% C₁₅ product; |
| Lutensol^{®}AO 7 | is an ether based on C₁₃-C₁₅ oxo alcohol and 7 moles of ethylene oxide, and the oxo alcohol ethoxylate consists of ca. 67% C₁₃ product and ca. 33% C₁₅ product; |
| Lutensol^{®}AO 8 | is an ether based on C₁₃-C₁₅ oxo alcohol and 8 moles of ethylene oxide, and the oxo alcohol ethoxylate consists of ca. 67% C₁₃ product and ca. 33% C₁₅ product; |
| Lutensol^{®}XL 70 | is an ether based on C₁₀-Guerbet alcohol and 7 moles of ethylene oxide; |
| Lutensol^{®}TO 7 | is an ether based on C₁₃ oxo alcohol and 7 moles of ethylene oxide; |
| Dehypon^{®} LS 24 | is an ether made from a C₁₂-C₁₄ fatty alcohol (1 mole), ethylene oxide (2 moles), and propylene oxide (4 moles); |

were available from BASF SE.

| | |
|---|---|
| Base oil N150 | CAS No. 64741-76-0, is Mineral oil available from Wistema GmbH, having a sulphur content of about 0.01 weight-% (determined according to EN ISA 8754), is a is a hydrocarbon mixture comprising in the range of from 65 to 70 weight-% paraffinic, in the range of from 27 to 32 weight-% naphthenic, and in the range of from 3 to 6 weight-% aromatic hydrocarbons. |
| Honeywell A-C^{®} | 629A is a low-density oxidized polyethylene (LDOxPE) homopolymer (PE Waxes) available from Honeywell. |

Ethoxylated C₁₀-Oxo alcohol with 7 EO, C₁₂-C₁₄ fatty alcohol, Branched tridecyl alcohol C₁₃ H₂₇OH, iso-tridecyl alcohol C₁₃H₂₇OH, Oleyl alcohol, C₁₀-Guerbet alcohol, Linear C₁₆-C₁₈ alcohol, C₁₀-Oxo alcohol, were available from BASF SE.

### Methods

### Weight average molecular weight (Mw)

Mw was determined according to DIN55672- 1 involving gel permeation chromatography using a refractometer as the detector. The mobile phase used was tetrahydrofuran (THF, 1mL/min, 35° C), the standard employed for determining the molecular weight being polystyrene (PS).

### Number average molecular weight (Mn)

Mn is determined according to DIN55672- 1 involving gel permeation chromatography using a refractometer as the detector. The mobile phase used was tetrahydrofuran (THF, 1mL/min, 35°C), the standard employed for determining the molecular weight being polystyrene (PS).

### Peak molecular weight (Mp)

The peak molecular weight (Mp) was determined from the retention time corresponding to the peak value of the obtained elution curve in gel permeation chromatography, based on standard polystyrene. The peak value of the elution curve is the point where the elution curve is at maximum.

Mₚ was determined according to DIN55672- 1 involving gel permeation chromatography using a refractometer as the detector. The mobile phase used was tetrahydrofuran (THF, 1mL/min, 35°C), the standard employed for determining the molecular weight being polystyrene (PS).

### Examples

### Reference Example 1: General procedure for the synthesis of polyalkyl acrylate by free radical polymerization (FRP) process

To a 5000 mL polymerization reactor equipped with an overhead stirrer, thermometer, distillation line, vacuum pump and dosing devices, was charged 926.0 g of solvent. The reactor was maintained under nitrogen atmosphere and the content was heated to 100°C. A monomer feed of 1900.0 g alkyl acrylate and 45.2 g a feed of tert-butylperoxy-2-ethylhexanoate were started, and these feeds were transferred to the reactor over a period of 300 minutes, while maintaining the temperature of the reaction mixture at 100 °C.

After complete addition of the feeds, the solvent and volatiles were removed by distillation under reduced pressure at 100°C to obtain the poly-alkyl acrylate as a clear, colorless viscous liquid with a polymer content >99 wt.%.

### Reference Example 2: General procedure for the transesterification of polyalkyl acrylate obtained by example 1

To a reactor maintained under nitrogen atmosphere, were charged a poly-alkyl acrylate (20-70 wt.%) and at least one alcohol (30-80 wt.%). The content of the reactorwas heated under nitrogen atmosphere at 100°C. 0.1-1.0 wt.% of a transesterification catalyst (e.g., tetrabutoxytitanate, lithium tert-butoxide, or lithium methanolate) was added to the reaction mixture and the resultant mixture was heated under reduced pressure (< 50mbar). The bath temperature was gradually increased to 160°C. After an expected amount of distillate was collected, the product was cooled to room temperature and was discharged from the reactor to obtain a modified polyacrylate polymer.

Polybutylacrylate was prepared according to the procedure of Reference Example 1 with n-butyl acrylate as alkyl acrylate and 2-butanol as solvent. Modified polyacrylate polymers of Examples 1-46 were prepared according to the procedure of Reference Example 2. The amounts of the polyalkyl acrylate polymer and the alcohol/s, and peak molecular weights of the modified polyacrylate polymers (products) are provided in Tables 1 and 2.

Table 1 relates to the modified polyacrylate polymers obtained by reacting polybutylacrylate with an ethoxylated polyether alcohol/s.

Table 2 relates to the modified polyacrylate polymers obtained by reacting a polybutylacrylate with an alkoxylated polyether alcohol and an unsubstituted C₈-C₃₆ alcohol.

**Table 1:**

| Modified polyacrylate polymers of Examples 1 to 18 prepared by reacting polybutyl acrylate with ethoxylated polyether alcohol/s. | | | | | | | |
|---|---|---|---|---|---|---|---|
| Example | Polyacrylate | Wt.% polyacrylate | polyether alcohol (1) | Wt.% polyether alcohol (1) | polyether alcohol (2) | Wt. % polyether alcohol (2) | Mol. Weight (Mp) |
| 1 | Polybutylacrylate Mn = 5000 g/mol | 50 | ethoxylated C13-C15 Oxo Alcohol (~67% C13, ~33% C15); 7 EO units | 50 | - | - | 15302 |
| 2 | Polybutylacrylate Mn = 5000 g/mol | 60 | ethoxylated C13-C15 Oxo Alcohol (~67% C13, ~33% C15); 7 EO units | 40 | - | - | 16125 |
| 3 | Polybutylacrylate Mn = 5000 g/mol | 45 | ethoxylated C13-C15 Oxo Alcohol (~67% C13, ~33% C15); 7 EO units | 55 | - | - | 18045 |
| 4 | Polybutylacrylate Mn = 5000 g/mol | 40 | ethoxylated C13-C15 Oxo Alcohol (~67% C13, ~33% C15); 7 EO units | 60 | - | - | 16867 |
| 5 | Polybutylacrylate Mn = 5000 g/mol | 40 | ethoxylated C13-C15 Oxo Alcohol (~67% C13, ~33% C15); 7 EO units | 60 | - | - | 17776 |
| 6 | Polybutylacrylate Mn = 5000 g/mol | 60 | ethoxylated iso-C13 oxo alcohol, 7 EO units | 40 | - | - | 16369 |
| 7 | Polybutylacrylate Mn = 5000 g/mol | 50 | ethoxylated iso-C13 oxo alcohol, 7 EO units | 50 | - | - | 16741 |
| 8 | Polybutylacrylate Mn = 5000 g/mol | 40 | ethoxylated iso-C13 oxo alcohol, 7 EO units | 60 | - | - | 17776 |
| 9 | Polybutylacrylate Mn = 5000 g/mol | 50 | ethoxylated C13-C15 Oxo Alcohol (~67% C13, ~33% C15); 5 EO units | 50 | - | - | 16616 |
| 10 | Polybutylacrylate Mn = 5000 g/mol | 60 | ethoxylated C13-C15 Oxo Alcohol (~67% C13, ~33% C15); 5 EO | 40 | - | - | 16125 |
| 11 | Polybutylacrylate Mn = 5000 g/mol | 50 | ethoxylated C13-C15 Oxo Alcohol (~67% C13, ~33% C15); 8 EO | 50 | - | - | 18456 |
| 12 | Polybutylacrylate Mn = 5000 g/mol | 60 | ethoxylated C13-C15 Oxo Alcohol (~67% C13, ~33% C15); 8 EO | 40 | - | - | 17250 |
| 13 | Polybutylacrylate Mn = 5000 g/mol | 50 | Ethoxylated C₁₀-Oxo alcohol; 7 EO | 50 | - | - | 17380 |
| 14 | Polybutylacrylate Mn = 5000 g/mol | 50 | Ethoxylated C₁₀-Guerbet alcohol; 7 EO | 50 | - | - | - |
| 15 | Polybutylacrylate Mn = 5000 g/mol | 25 | ethoxylated C13-C15 Oxo Alcohol (~67% C13, ~33% C15); 7 EO | 45 | ethoxylated C13-C15 Oxo Alcohol (~67% C13, ~33% C15; 11 EO | 30 | - |
| 16 | Polybutylacrylate Mn = 5000 g/mol | 30 | ethoxylated C13-C15 Oxo Alcohol (~67% C13, ~33% C15); 7 EO | 70 | - | - | - |
| 17 | Polybutylacrylate Mn = 5000 g/mol | 50 | ethoxylated C13-C15 Oxo Alcohol (~67% C13, ~33% C15); 3 EO | 50 | - | - | - |
| 18 | Polybutylacrylate Mn = 5000 g/mol | 50 | ethoxylated C13-C15 Oxo Alcohol (~67% C13, ~33% C15); 11 EO | 50 | - | - | - |

**Table 2:**

| Modified polyacrylate polymers 19 to 46 prepared by reacting polybutyl acrylate with an ethoxylated polyether alcohol/s and an unsubstituted C₈-C₃₆ alcohol. | | | | | | | | |
|---|---|---|---|---|---|---|---|---|
| R¹-(O-CH₂CH₂)ₙ-OH Formula (A1) | | | | | | | | |
| Example | Name polyacrylate | Wt.% polyacrylate | R¹ group of alkoxylated polyether of Formula (A1) | Index "n" of Formula (A1) | Wt. % alkoxylated polyether | unsubstituted C₈-C₃₆ alcohol | Wt.% unsubstituted C₈-C₃₆ alcohol | Mol. Weight (Mp) |
| 19 | Polybutylacrylate Mn = 5000 g/mol | 41.0 | C₁₂-₁₄ fatty alcohol | 7 | 55.0 | Oleyl alcohol | 4.0 | 15861 |
| 20 | Polybutylacrylate Mn = 5000 g/mol | 40.0 | Branched tridecyl C₁₃H₂₇ alcohol | 6 | 56.0 | Oleyl alcohol | 4.0 | 13430 |
| 21 | Polybutylacrylate Mn = 5000 g/mol | 44.0 | iso-C₁₃H₂₇ alcohol | 5 | 52.0 | Oleyl alcohol | 4.0 | 14300 |
| 22 | Polybutylacrylate Mn = 5000 g/mol | 43.0 | C₁₀-Guerbet alcohol | 7 | 52.0 | Oleyl alcohol | 5.0 | 16200 |
| 23 | Polybutylacrylate Mn = 5000 g/mol | 32.0 | Linear C₁₆-C₁₈ alcohol | 11 | 65.0 | Oleyl alcohol | 3.0 | 18730 |
| 24 | Polybutylacrylate Mn = 5000 g/mol | 38.0 | C₁₀-Guerbet alcohol | 7 | 58.0 | Oleyl alcohol | 4.0 | - |
| 25 | Polybutylacrylate Mn = 5000 g/mol | 42.0 | C₁₀-Oxo alcohol | 7 | 54.0 | Oleyl alcohol | 4.0 | 15600 |
| 26 | Polybutylacrylate Mn = 5000 g/mol | 40.0 | C₁₃-C₁₅ Oxo Alcohol (~67% C13, ~33% C15) | 7 | 56.0 | Oleyl alcohol | 4.0 | 13690 |
| 27 | Polybutylacrylate Mn = 5000 g/mol | 44.0 | C₁₂-C₁₄ fatty alcohol | 7 | 51.0 | Oleyl alcohol | 5.0 | 15600 |
| 28 | Polybutylacrylate Mn = 5000 g/mol | 44.0 | Branched tridecyl alcohol, C₁₃ | 6 | 52.0 | Oleyl alcohol | 4.0 | 12884 |
| 29 | Polybutylacrylate Mn = 5000 g/mol | 47.0 | iso C₁₃H₂₇ alcohol | 5 | 48.0 | Oleyl alcohol | 5.0 | 13349 |
| 30 | Polybutylacrylate Mn = 5000 g/mol | 47.0 | C₁₀-Guerbet alcohol | 7 | 49.0 | Oleyl alcohol | 4.0 | 12440 |
| 31 | Polybutylacrylate Mn = 5000 g/mol | 41.0 | C₁₀-Guerbet alcohol | 7 | 54.0 | Oleyl alcohol | 5.0 | 15340 |
| 32 | Polybutylacrylate Mn = 5000 g/mol | 45.0 | C₁₀-Oxo alcohol | 7 | 50.0 | Oleyl alcohol | 5.0 | 15715 |
| 33 | Polybutylacrylate Mn = 5000 g/mol | 43.0 | C₁₃-C₁₅ Oxo Alcohol (~67% C13, ~33% C15) | 7 | 52.0 | Oleyl alcohol | 5.0 | 14076 |
| 34 | Polybutylacrylate Mn = 5000 g/mol | 35.0 | Linear C₁₆-C₁₈ alcohol | 11 | 61.0 | Oleyl alcohol | 4.0 | 17690 |
| 35 | Polybutylacrylate Mn = 5000 g/mol | 44.0 | iso -C₁₃H₂₇ alcohol | 7 | 51.0 | Oleyl alcohol | 5.0 | 13940 |
| 36 | Polybutylacrylate Mn = 5000 g/mol | 54.0 | Branched tridecyl alcohol, C₁₃ | 3 | 41.0 | Oleyl alcohol | 5.0 | 13457 |
| 37 | Polybutylacrylate Mn = 5000 g/mol | 40.0 | Branched tridecyl alcohol, C₁₃ | 9 | 56.0 | Oleyl alcohol | 4.0 | 16158 |
| 38 | Polybutylacrylate Mn = 5000 g/mol | 40.0 | iso-C₁₃H₂₇ alcohol | 7 | 55.0 | Oleyl alcohol | 5.0 | 21525 |
| 39 | Polybutylacrylate Mn = 5000 g/mol | 38.0 | Branched tridecyl alcohol, C₁₃ | 10 | 58.0 | Oleyl alcohol | 4.0 | 17082 |
| 40 | Polybutylacrylate Mn = 5000 g/mol | 40.0 | iso -C₁₃H₂₇ alcohol | 7 | 55.0 | Oleyl alcohol | 5.0 | 20466 |
| 41 | Polybutylacrylate Mn = 5000 g/mol | 38.0 | Branched tridecyl alcohol, C₁₃ | 10 | 58.0 | Oleyl alcohol | 4.0 | 18379 |
| 42 | Polybutylacrylate Mn = 5000 g/mol | 50.0 | Branched tridecyl alcohol, C₁₃ | 3 | 45.0 | Oleyl alcohol | 5.0 | 16453 |
| 43 | Polybutylacrylate Mn = 5000 g/mol | 37.0 | Branched tridecyl alcohol, C₁₃ | 9 | 59.0 | Oleyl alcohol | 4.0 | 20433 |
| 44 | Polybutylacrylate Mn = 5000 g/mol | 35.0 | Branched tridecyl alcohol, C₁₃ | 10 | 61.0 | Oleyl alcohol | 4.0 | 19281 |
| 45 | Polybutylacrylate Mn = 5000 g/mol | 40.0 | iso -C₁₃H₂₇ alcohol | 7 | 55.0 | Oleyl alcohol | 5.0 | 18160 |
| 46 | Polybutylacrylate Mn = 5000 g/mol | 40.0 | iso -C₁₃H₂₇ alcohol | 7 | 55.0 | Oleyl alcohol | 5.0 | 18320 |

### Reference Example 3: General procedure for synthesis of polyalkyl acrylate by controlled free radical polymerization (CFRP)

To a reactor maintained under nitrogen atmosphere were charged n-butyl acrylate (n-BA, 1211.13 g, Mw 128.7 g/mol) and nitroxylether (B-I) (60.00 g, Mw 317.48 g/mol). The reaction mixture was heated at 115°C for 1.5 h. A feed n-BA (2422.26 g) was fed to the reactor over 3 hours and the resultant mixture was heated for a further 4.5 h at 125°C. The residual monomer was distilled off at 105°C and 20 mbar to obtain the product polybutylacrylate. Yield: 50.36% (Mn = 9700 g/mol, PDI = 1.21, viscous liquid).

### Reference Example 4: General procedure for trans-esterification of the polyalkyl acrylate obtained by example 3

In a 5-necked 2000 mL HWS reactor equipped with an overhead stirrer, thermometer, distillation line, vacuum pump and septum, were charged the polyalkyl acrylate (polybutylacrylate) and the alcohol (polyalkylenethers, unsubstituted C₈-C₃₆ alcohol, or mixture thereof). The reaction mixture was gradually heated under nitrogen. At 60°C, the mixture was dried (water traces removed) under reduced pressure. Vacuum distillation was performed for 4h. 0.1-1.0 wt.% of tetrabutoxytitanate was added and the resultant mixture was heated under reduced pressure until the expected amount of n-butanol was separated. During this vacuum distillation step, the reaction mixture was heated at 100°C or gradually heated towards 145°C depending on the reaction mixture and the conversion of the alcohol (for transesterification). The final product was cooled to room temperature and discharged from the reactor.

Polybutylacrylate was prepared according to Reference Examples 3. The following modified polyacrylates of Examples 47 to 56 were prepared according to Reference Example 4 from said polybutylacrylate.

**Table 3:**

| Modified polyacrylate polymers prepared by CFRP according to the general procedure of Reference Examples 3 and 4 | | | | | | | |
|---|---|---|---|---|---|---|---|
| Example | polyacrylate | Wt.% polyacrylate | alkoxylated polyether | Wt.% alkoxylated polyether | alkoxylated polyether (2) | Wt.% alkoxylated polyether (2) | Mol. Weight (Mp) |
| 47 | Polybutylacrylate 9700 g/mol | 70.0 | ethoxylated C₁₃-C₁₅ Oxo Alcohol (~67% C13, ~33% C15); 7 EO units | 30.0 | - | - | - |
| 48 | Polybutylacrylate 9700 g/mol | 44.0 | ethoxylated C₁₃-C₁₅ Oxo Alcohol (~67% C13, ~33% C15); 7 EO units | 56.0 | - | - | - |
| 49 | Polybutylacrylate 9700 g/mol | 28.5 | ethoxylated C₁₃-C₁₅ Oxo Alcohol (~67% C13, ~33% C15); 7 EO units | 71.5 | - | - | 19730 |
| 50 | Polybutylacrylate 9700 g/mol | 37.6 | ethoxylated C₁₃-C₁₅ Oxo Alcohol (~67% C13, ~33% C15); 3 EO units | 62.4 | - | - | 20575 |
| 51 | Polybutylacrylate 9700 g/mol | 69.6 | ethoxylated C₁₃-C₁₅ Oxo Alcohol (~67% C13, ~33% C15); 7 EO units | 30.4 | - | - | 13290 |
| 52 | Polybutylacrylate 9700 g/mol | 43.6 | ethoxylated C₁₃-C₁₅ Oxo Alcohol (~67% C13, ~33% C15); 7 EO units | 56.4 | - | - | 19745 |
| 53 | Polybutylacrylate 9700 g/mol | 28.3 | ethoxylated C₁₃-C₁₅ Oxo Alcohol (~67% C13, ~33% C15); 7 EO units | 71.7 | - | - | 22744 |
| 54 | Polybutylacrylate 9700 g/mol | 34.5 | ethoxylated C₁₃-C₁₅ Oxo Alcohol (~67% C13, ~33% C15); 3 EO units | 50.0 | ethoxylated C₁₃-C₁₅ Oxo Alcohol (~67% C13, ~33% C15; 7 EO units | 15.5 | 21558 |
| 55 | Polybutylacrylate 9700 g/mol | 34.5 | ethoxylated C₁₃-C₁₅ Oxo Alcohol (~67% C13, ~33% C15); 3 EO units | 65.5 | - | - | 32608 |
| 56 | Polybutylacrylate 9700 g/mol | 37.8 | ethoxylated C₁₃-C₁₅ Oxo Alcohol (~67% C13, ~33% C15); 3 EO units | 62.2 | - | - | 13185 |

### Examples 57 to 86

Polyalkylacrylate according to Examples 57 to 68 was prepared according to Reference Example 1 using either ethyl acrylate or n-butyl acrylate as monomer and a solvent selected from isopropanol, 2-butanol, 1-methoxy-2-propylacetate, n-butyl acetate, 2-butanol and xylene. Details regarding monomer used and solvent are given in Table 4. From these polyalkylacrylates, modified polyalkylacrylates of Examples 69 to 86 were prepared according to Reference Example 2, wherein details regarding the specific polyalkylacrylate, alcohol and transesterification catalyst are given in Table 5.

**Table 4:**

| Polyacrylate polymers of Examples 57 to 68 prepared by CFRP according to the general procedure of Reference Examples 1. | | | | | | |
|---|---|---|---|---|---|---|
| Example | Polyalkyl acrylate | Monomer | solvent | Mn | Mw | Mp |
| 57 | Polyethyl acrylate | Ethyl acrylate | Isopropanol | 1793 | 3250 | 2964 |
| 58 | Polyethyl acrylate | Ethyl acrylate | Isopropanol | 1985 | 3604 | 3243 |
| 59 | Polyethyl acrylate | Ethyl acrylate | Isopropanol | 1860 | 3554 | 3209 |
| 60 | Polyethyl acrylate | Ethyl acrylate | Isopropanol | 1558 | 2744 | 2454 |
| 61 | Polyethyl acrylate | Ethyl acrylate | 2-Butanol | 1730 | 3524 | 3244 |
| 62 | Polyethyl acrylate | Ethyl acrylate | 1-Methoxy-2-propyl acetate | 6598 | 19838 | 19694 |
| 63 | Polyethyl acrylate | Ethyl acrylate | nButyl acetate | 7449 | 23396 | 24967 |
| 64 | Poly(n-butyl acrylate) | n-Butyl acrylate | 2-Butanol | 2613 | 4799 | 4423 |
| 65 | Poly(n-butyl acrylate) | n-Butyl acrylate | Xylene | 5876 | 14275 | 12547 |
| 66 | Poly(n-butyl acrylate) | n-Butyl acrylate | 1-Methoxy-2-propyl acetate | 8269 | 30989 | 27602 |
| 67 | Poly(n-butyl acrylate) | n-Butyl acrylate | nButyl acetate | 10501 | 48686 | 29180 |
| 68 | Poly(n-butyl acrylate) | n-Butyl acrylate | Isopropanol | 3942 | 11029 | 11646 |

**Table 5:**

| Modified Polyacrylate polymers of Examples 69 to 86 prepared according to the general procedure of Reference Examples 2 | | | | | | | | |
|---|---|---|---|---|---|---|---|---|
| Example | Polyalkyl acrylate | Wt% Polyalkyl acrylate | R1 group of alkoxylated polyether of Formula (A1) | Index "n" of Formula (A1) | wt% alkoxylated polyether | unsubstituted C8-C36 alcohol | wt% unsubstituted C8-C36 alcohol | Mol. Weight (Mp) |
| 69 | 57 | 43.9 | iso-C13H27 alcohol | 7 | 51.4 | Oleyl alcohol | 4.6 | 6225,1 |
| 70 | 58 | 43.9 | iso-C13H27 alcohol | 7 | 51.4 | Oleyl alcohol | 4.6 | 7107 |
| 71 | 59 | 43.9 | iso-C13H27 alcohol | 7 | 51.4 | Oleyl alcohol | 4.6 | 7117,8 |
| 72 | 60 | 43.9 | iso-C13H27 alcohol | 7 | 51.4 | Oleyl alcohol | 4.6 | 5788,5 |
| 73 | 61 | 43.9 | iso-C13H27 alcohol | 7 | 51.4 | Oleyl alcohol | 4.6 | 7036,3 |
| 74 | 62 | 43.9 | iso-C13H27 alcohol | 7 | 51.4 | Oleyl alcohol | 4.6 | 37903 |
| 75 | 63 | 43.9 | iso-C13H27 alcohol | 7 | 51.4 | Oleyl alcohol | 4.6 | 59418 |
| 76 | 68 | 43.9 | iso-C13H27 alcohol | 7 | 51.4 | Oleyl alcohol | 4.6 | 13451 |
| 77 | 68 | 57.6 | iso-C13H27 alcohol | 7 | 0.0 | Oleyl alcohol | 42.4 | 12741 |
| 78 | 68 | 71.9 | iso-C13H27 alcohol | 7 | 28.1 | | | 12293 |
| 79 | 68 | 46.1 | iso-C13H27 alcohol | 7 | 53.9 | | | 12718 |
| 80 | 68 | 29.9 | iso-C13H27 alcohol | 7 | 70.1 | | | 11380 |
| 81 | 68 | 24.3 | iso-C13H27 alcohol | 7 | 75.7 | | | 12832 |
| 82 | 64 | 43.9 | iso-C13H27 alcohol | 7 | 51.4 | Oleyl alcohol | 4.6 | 8506 |
| 83 | 65 | 43.9 | iso-C13H27 alcohol | 7 | 51.4 | Oleyl alcohol | 4.6 | 23622 |
| 84 | 66 | 43.9 | iso-C13H27 alcohol | 7 | 51.4 | Oleyl alcohol | 4.6 | 39321 |
| 85 | 68 | 40.5 | iso-C13H27 alcohol | 7 | 55.3 | Oleyl alcohol | 4.3 | 9614 |
| 86 | 68 | 100 | - | - | - | - | - | 11646 |

### Part 2: Performance Testing

### Preparation of Defoamer compositions

The following defoamer compositions were prepared.

### A) Defoamer compositions prepared using polyether modified polysiloxane as a hydrophobic liquid

### Reference Example 5: Synthetic procedure for polyether modified siloxane:

### Step 1:

620.0 g Octamethylcyclotetrasiloxane, 188.0 g dimethyldiethoxysilane and 0.5 g trifluoromethanesulfonic acid were charged to a 2 L reactor and the reaction mixture was stirred at 60 °C for 6 hours. After the establishment of the equilibrium, determined via the increase in the solids fraction of the mixture, the catalyst was neutralized by addition of 0.8 g of tri-n-butylamine. The reaction mixture was filtered, and unreacted starting materials and low molecular mass oligomers formed as byproducts were removed by stripping under reduced pressure. The product obtained was analyzed by ¹H-NMR spectroscopy. It was found that the product comprised 678.0 g of the corresponding siloxane.

### Step 2:

45.0 g of the siloxane obtained in step 1, 160.0 g of n-butylpolypropylene glycol (2000 g/mol) and 0.2 g methanesulfonic acid were mixed in a round bottom flask equipped with a distillation bridge. The mixture was heated at 150 °C under reduced pressure with stirring for 6 hours. The ethanol formed during the course of heating was removed continuously from the reaction mixture by distillation. The progress of the reaction was monitored by gel permeation chromatography. After complete conversion, the reaction mixture was cooled to room temperature, catalyst was neutralized by addition of 0.5 g n-tributylamine and the residual was filtered off. The product polypropylene glycol modified siloxane (194.0 g) was obtained as a clear liquid and used for the next step without further purification.

### Step 3:

98.0 g of the alpha,omega-polypropylene glycol modified siloxane obtained in step 2 was added to a glass jar (250 ml), which was placed in a water-bath. 2.0 g hydrophobic fumed silica (BET: 90 - 130 m²/g) was added in small portions to the polyether modified siloxane under stirring and then stirring was continued for further 10 minutes at room temperature. Afterwards the stirrer was replaced by a high-speed rotor-stator disperser and the silica was dispersed for 5 minutes at room temperature at 15000 rpm. The obtained product was used for the silicone defoamer formulations without further purification.

### Defoamer compositions PS-1 to PS-5 and PS-6 to PS-23

The defoamer composition PS-1 to PS-5, as well as PS-6 to PS-23, were prepared by mixing alpha,omega-polypropylene glycol modified polysiloxane obtained in Example 5 as a hydrophobic liquid (16.0 wt.%), a diluent Dehypon^{®}LS 24 (64.0 wt.%), and a modified polyacrylate polymer (20.0 wt.%).

### Comparative composition PS-C

Comparative composition PS-C was prepared by mixing alpha, omega-polypropylene glycol modified polysiloxane as a hydrophobic liquid (20.0 wt.%), and a diluent Dehypon^{®}LS 24 (80.0 wt.%).

### B) Stability of the defoamer compositions

Initially, the defoamer compositions (PS-1 to PS-5, as well as PS-6 to PS-23) were checked visually for compatibility. The formulations with the modified polyacrylate polymers (examples see table 4) were homogeneous and stable, and they did not show any phase separation or sedimentation.

### C) Compatibility and defoamer activity of the defoamer compositions

To evaluate compatibility and defoamer activity, the defoamer compositions were added to different latices that are used as model test system for industrial and architectural waterborne coatings and paints.

### Evaluation of defoamer composition PS-1

A defoamer composition PS-1 (0.6 g) was added to a latex binder resin for paints (Acronal^{®}LR 9014) (amount: 120.0 g) and the resultant mixture was stirred at a high speed (4500 rpm) for 3 minutes with a high-speed mixer (disc diameter: 3 cm) to obtain a coating composition CC-PS-1. Coating compositions CC-PS-2 to CC-PS-5, as well as CC-PS-6 to CC-PS-23, were prepared using the procedure above.

### Compatibility test:

After 24 hours, the coating composition CC-PS-1 (test system with the defoamer composition) was applied on glass plates with a slit coater (100 µm wet) and dried overnight.

Glass plates coated with coating compositions CC-PS-2 to CC-PS-5 as well as CC-PS-6 to CC-PS-23, were similarly prepared using procedure above.

The compatibility of coating compositions CC-PS-1 to CC-PS-5 as well as CC-PS-6 to CC-PS-23, were rated by visual assessment of the coating surface with respect to surface defects on a scale 5 (best: without any defects) to 1 (worst: many craters or other defects).

### Test of defoaming efficiency with sponge roller test:

A sponge roller was pre-soaked with de-ionized water and spin dried. The test system CC-PS-1 (~16.0 g) was poured on a polyester foil (20 cm x 20 cm) and distributed with the sponge roller homogeneously over the total area in a comparable manner.

Polyester foils coated with coating compositions CC-PS-2 to CC-PS-5 as well as CC-PS-6 to CC-PS-23, were similarly prepared using procedure above.

The appearance of a dried film was rated from 5 to 1 by visual assessment of the number of bubbles left in and on the film (5: no bubble, 1: many bubbles).

**Table 6:**

| Defoaming efficiency and compatibility in the test system Acronal^{®}LR 9014: | | | |
|---|---|---|---|
| Defoamer composition | Modified polyacrylate polymer from example | Compatibility | Defoaming efficiency |
| PS-C (comparative) | - | 4.0 | 1.0 |
| PS-1 | 1 | 4.0 | 4.0 |
| PS-2 | 5 | 4.0 | 4.0 |
| PS-3 | 8 | 4.5 | 4.5 |
| PS-4 | 3 | 4.0 | 4.0 |
| PS-5 | 46 | 4.5 | 4.5 |
| PS-6 | 86 | 4 | 1 |
| PS-7 | 69 | 4.5 | 3 |
| PS-8 | 70 | 4.5 | 3.5 |
| PS-9 | 71 | 4.5 | 4.5 |
| PS-10 | 72 | 4.5 | 3.5 |
| PS-11 | 73 | 4.5 | 3 |
| PS-12 | 74 | 4.5 | 1.5 |
| PS-13 | 75 | 4.5 | 1 |
| PS-14 | 76 | 4.5 | 4.5 |
| PS-15 | 77 | 4 | 1 |
| PS-16 | 78 | 4.5 | 3 |
| PS-17 | 79 | 4.5 | 4 |
| PS-18 | 80 | 4.5 | 4 |
| PS-19 | 81 | 4.5 | 1.5 |
| PS-20 | 82 | 4.5 | 4.5 |
| PS-21 | 83 | 4.5 | 4 |
| PS-22 | 84 | 4.5 | 4 |
| PS-23 | 85 | 4.5 | 4.5 |

It is evident from Table 6, that defoamer compositions of the invention showed a high defoaming efficiency and a high compatibility. Thus, the defoamer compositions of the invention showed balanced defoaming efficiency and compatibility as compared to the comparative composition.

### Comparative compositions MO-C

Comparative composition was prepared using a mineral oil as a hydrophobic liquid, and a wax. Comparative composition did not contain the modified polyacrylate polymer.

Comparative composition MO-C was prepared by adding a wax Honeywell AC^{®}629A (7.3 wt.%) to Base oil N150^{®} (Wistema GmbH) (a mineral oil) as a hydrophobic liquid (20.8 wt.%). The mixture was heated to 110°C under stirring until the wax was completely dissolved. The mixture was added to 71.9 wt.% cold Base oil N150^{®} under stirring, followed by cooling to 50°C and homogenization with a rotor-stator equipment during the cooling phase.

### Defoamer compositions prepared using a mineral oil

### A) Defoamer compositions MO-1 to MO-5 and MO-6 to MO-11

The defoamer compositions MO-1 to MO-5, as well as MO-6 to MO-11, were prepared by mixing a modified polyacrylate polymer (examples listed in table 7) (4.0 wt.%) to the composition MO-C containing a Base oil N150^{®} (Wistema GmbH) (a mineral oil) as a hydrophobic liquid, and a wax Honeywell AC^{®}629A.

Thus, the composition of MO-1 to MO-5, as well as of MO-6 to MO-11, was as follows: a modified polyacrylate polymer (examples listed in table 7) (4.0 wt.%), wax Honeywell AC^{®}629A (7.0 wt.%), Base oil N150^{®} (Wistema GmbH) (a mineral oil) (20.0 wt.%), and Base oil N150^{®}(69.0 wt.%).

### B) Stability of the defoamer compositions

Initially, the defoamer compositions (MO-1 to MO-5, as well as MO-6 to MO-11) were checked visually for compatibility. The formulations with the modified polyacrylate polymers (examples see table 5) were homogeneous and stable, and they did not show any phase separation or sedimentation.

### C) Compatibility and defoamer activity of the defoamer compositions

To evaluate compatibility and defoamer activity, the defoamer compositions were added to different latices that are used as model test system for industrial and architectural waterborne coatings and paints.

### Test of new defoamer compositions based on formulation example MO-1:

The defoamer composition MO-1 (0.6 g) was added to a latex binder resin for paints (Acronal^{®} EDGE 6283) (amount: 120g) and stirred at high speed (5000 rpm) for 3 minutes with a high-speed mixer (disc diameter: 4 cm) to obtain a coating composition CC-MO-1.

Coating compositions CC-MO-2 to CC-MO-5, as well as CC-MO-6 to CC-MO-11, were prepared using the procedure above.

### Compatibility test:

After 24 hours the coating compositions CC-MO-1 (test system with the defoamer composition) was applied on a glass plate with a slit coater (100 µm wet) and dried overnight.

Glass plates coated with coating compositions CC-MO-2 to CC-MO-5, as well as CC-MO-6 to CC-MO-11, were similarly prepared using procedure above.

The compatibility of coating compositions CC-MO-1 to CC-MO-5, as well as CC-MO-6 to CC-MO-11, were rated by visual assessment of the coating surface with respect to surface defects from a scale 5 (best: without any defects) to 1 (worst: many craters or other defects).

### Test of defoaming efficiency with sponge roller test:

A sponge roller was pre-soaked with de-ionized water and spin dried afterwards. The test system CC-MO-1 (~16 g) was poured on a polyester foil (20 cm x 20 cm) and distributed with the sponge roller homogeneously over the total area in a comparable manner.

Polyester foils coated with coating compositions CC-MO-2 to CC-MO-5, as well as CC-MO-6 to CC-MO-11, were similarly prepared using procedure above.

The appearance of a dried film was rated from 5 to 1 by visual assessment of the number of bubbles left in and on the film (5: no bubble, 1: many bubbles).

**Table 7:**

| Defoaming efficiency and compatibility in the test system Acronal^{®} EDGE 6283: | | | |
|---|---|---|---|
| Defoamer composition | Modified polyacrylate polymer from example | Compatibility | Defoaming efficiency |
| MO-C (comparative) | - | 3.5 | 4.5 |
| MO-1 | 1 | 4.0 | 5.0 |
| MO-2 | 5 | 4.5 | 5.0 |
| MO-3 | 8 | 4.0 | 5.0 |
| MO-4 | 3 | 4.0 | 5.0 |
| MO-5 | 46 | 4.5 | 5.0 |
| MO-6 | 76 | 5 | 3 |
| MO-7 | 77 | 5 | 1 |
| MO-8 | 79 | 5 | 3 |
| MO-9 | 80 | 5 | 2.5 |
| MO-10 | 82 | 5 | 3.5 |
| MO-11 | 85 | 5 | 4 |

It is evident from Table 7 that defoamer compositions of the invention showed a high defoaming efficiency and a high compatibility. Thus, the defoamer compositions of the invention showed balanced defoaming efficiency and compatibility compared to the comparative composition.

## Claims

1. A defoamer composition comprising
a. at least one hydrophobic liquid; and
b. at least one modified polyacrylate polymer obtainable by a process comprising
i. polymerizing at least one acrylate monomer selected from substituted or unsubstituted C₁-C₂₂ alkyl acrylates, substituted or unsubstituted C₄-C₂₂ cycloalkyl acrylates, substituted or unsubstituted C₁-C₂₂ acrylamides, or esters of acrylic acid with polyalkylether alcohols,
to obtain at least one polyacrylate polymer; and
ii. modifying the at least one polyacrylate polymer obtained in step (i) by transesterification with at least one polyalkylether alcohol (c2) and optionally with at least one unsubstituted C₈-C₃₆ alcohol (c1).

2. The composition according to claim 1, wherein the at least one hydrophobic liquid is selected from the group consisting of mineral oils, organo-modified silicones, vegetable oils, synthetic hydrocarbons, fatty alcohols, alkoxylated fatty alcohols, esters of fatty alcohols, fatty carboxylic acid esters, liquid polypropylene oxides, liquid polypropylene oxide-polyethylene oxide copolymers, esters of polypropylene oxide, or esters of polypropylene oxide-polyethylene oxide copolymers.

3. The composition according to claim 1 or 2, wherein the at least one hydrophobic liquid is a mineral oil.

4. The composition according to claim 1 or 2, wherein the at least one hydrophobic liquid is organo-modified silicone.

5. The composition according to any of claims 1 to 4, wherein the alkyl acrylate is selected from the group consisting of ethyl acrylate, propyl acrylate, n-butyl acrylate, 2-ethylhexyl acrylate, n-decyl acrylate, isodecyl acrylate, linear or branched C₁₂-C₁₆ alkyl acrylates, n-octadecyl acrylate, or combinations of two or more thereof.

6. The composition according to any of claims 1 to 5, wherein the at least one polyacrylate polymer is a copolymer selected from random copolymers, or block copolymers, and wherein step (i) involves polymerizing the acrylate monomer and at least one monomer selected from methacrylate monomers, or styrene monomers to obtain the at least one polyacrylate polymer.

7. The composition according to any of claims 1 to 6, wherein the unsubstituted C₈-C₃₆ alcohol (C1) is selected from the group consisting of 2-ethylhexanol, n-decanol, isodecanol, linear or branched C₁₂-C₁₆ alcohols, n-octadecanol, oleyl alcohol, or combinations of two or more thereof.

8. The composition according to any of claims 1 to 7, wherein the polyether alcohol (c2) is a compound of Formula (A) 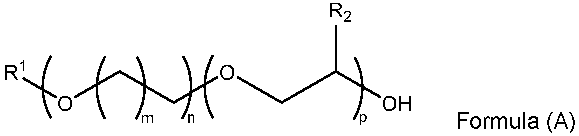 wherein,
m is an integer in the range of from ≥1 to ≤ 10;
n and p are independently integers in the range of from ≥0 to ≤ 2000, wherein n+p is an integer in the range of from ≥1 to ≤ 4000;
R¹ is selected from the group consisting of substituted or unsubstituted C₁-C₃₀ alkyl, substituted or unsubstituted C₂-C₃₀ alkenyl, or substituted or unsubstituted phenyl; and R² is selected from the group consisting of methyl, ethyl, propyl, isopropyl, n-butyl, isobutyl, tert-butyl or substituted or unsubstituted phenyl.

9. The composition according to any of claims 1 to 8, wherein the polyether alcohol (c2) is a compound of Formula (A1)
R¹-(O-CH₂CH₂)ₙ-OH Formula (A1)
wherein,
n is an integer in the range of from ≥1 to ≤ 100; and
R¹ is selected from the group consisting of substituted or unsubstituted C₁-C₃₀ alkyl, substituted or unsubstituted C₂-C₃₀ alkenyl, or substituted or unsubstituted phenyl.

10. The composition according to any of claims 1 to 9, wherein the peak molecular weight of the at least one modified polyacrylate polymer is in the range from 2000 to 100,000 g/mol according to to DIN 55672-1.

11. The composition according to any of claims 1 to 10, wherein the at least one modified polyacrylate polymer comprises
1. 20.0 to 70.0 wt.% of at least one polyacrylate polymer; and
2. 30.0 to 80.0 wt.% of at least one polyalkylether alcohol (c2) and optionally at least one unsubstituted C₈-C₃₆ alcohol (c1),;
based on the total weight of the at least one modified polyacrylate polymer being 100 weight-%.

12. The composition according to any of claims 1 to 11, wherein the step (i) is carried out in the presence of at least one nitroxylether of general formula (8) 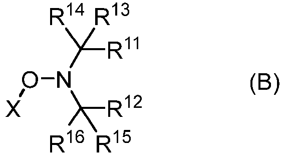 wherein
R¹¹ and R¹² are independently selected from substituted or unsubstituted C₁-C₂₀ alkyl, substituted or unsubstituted phenyl, or substituted or unsubstituted C₇-C₁₈ aralkyl;
wherein the substituted alkyl bears a substituent selected from C₁-C₄ alkoxy, C₁-C₄ alkoxy-C₁-C₄ alkoxy, or PO₃R^{z}₂, and R^{z} is C₁-C₄ alkyl; or
R¹¹ and R¹² together form a ring comprising substituted or unsubstituted C₂-C₁₀ alkylene or substituted or unsubstituted C₂-C₁₀ alkenylene;
wherein the substituted C₂-C₁₀ alkylene or substituted C₂-C₁₀ alkenylene bear 1, 2, 3, 4 or 5 substituents independently selected from C₁-C₄ alkyl, C₁-C₄ alkoxy, C₁-C₄ alkoxy-C₁-C₄ alkoxy, COOH, or CONH₂; and
wherein the C₂-C₁₀ alkylene or C₂-C₁₀ alkenylene optionally have one or two CH₂ groups independently of another replaced by O, C=O, C=NOH, CH-OCOCH₃ or NR^{x}, and R^{x} is C₁-C₄ alkyl or C₁-C₄ alkoxy;
R¹³ is C₁-C₄ alkyl or H;
R¹⁴, R¹⁵, and R¹⁶ are independently of one another are C₁-C₄ alkyl;
X is selected from the group consisting of the group consisting of -CH₂-phenyl, -CHCH₃-phenyl, -C(CH₃)₂-phenyl, -C(C₅-C₆₋cycloalkyl)₂-CN, -C(CH₃)₂CN, -CH₂CH=CH₂, - (CH₃)CH-CH=CH₂, -(C₁-C₄alkyl)CHR¹⁷-C(O)-phenyl, -(C₁-C₄alkyl)-CHR¹⁷-C(O)-(C₁-C₄alkoxy), -(C₁-C₄alkyl)-CHR¹⁷-C(O)-(C₁-C₄)alkyl, -(C₁-C₄alkyl)-CHR¹⁷-C(O)-N-di(C₁-C₄alkyl), -(C₁-C₄alkyl)-CHR¹⁷-C(O)-NH(C₁-C₄alkyl), and -(C₁-C₄alkyl)-CHR¹⁷-C(O)-NH₂, wherein
R¹⁷ is hydrogen or C₁-C₄alkyl.

13. The composition according to any of claims 1 to 12 further comprising at least one additive selected from the group consisting of water, non-ionic surfactants, anionic surfactants, liquid alkoxylates selected from liquid polypropyleneoxide or liquid polypropyleneoxide copolymers, liquid polyethers, liquid polyesters, or solid particles based on silica or based on synthetic or natural waxes.

14. The composition according to any of claims 1 to 13, which comprises
c. at least one hydrophobic liquid, which is one or more mineral oil(s) and/or one or more organo-modified silicone(s);
d. at least one modified polyacrylate polymer obtainable by a process comprising
j. polymerizing at least one substituted or unsubstituted C₁-C₂₂ alkyl acrylate; and
jj. modifying the at least one polyacrylate polymer obtained in step (i) by transesterification with at least one polyalkylether alcohol (c2) and optionally with at least one unsubstituted C₈-C₃₆ alcohol (c1);
and water.

15. Use of the defoamer composition according to any of the claims 1 to 14 for reducing or preventing foam in an aqueous composition; wherein the amount of the defoamer composition is in the range of from 0.01 to 5.0 wt.% based on the total weight of the aqueous composition being 100 weight-%, wherein the aqueous composition is preferably selected from the group consisting of the group consisting of water-based paint, coating composition, ink, and adhesive composition.
